# EUROPÄISCHE PATENTSCHRIFT

(11) **EP 2 158 421 B1**
(45) Veröffentlichungstag und Bekanntmachung des Hinweises auf die Patenterteilung: **17.08.2011**
(21) Anmeldenummer: 08784789.3
(22) Anmeldetag: 15.07.2008
(51) Int. Cl.: F16K 31/00, F16K 31/56

(54) **SCHALTVENTIL UND VERFAHREN ZUM SCHALTEN EINES SCHALTVENTILS**
PIVOT VALVE AND METHOD FOR SWITCHING A PIVOT VALVE
SOUPAPE DE COMMANDE ET PROCEDE POUR COMMUTER UNE SOUPAPE DE COMMANDE

(30) Priorität: 27.07.2007 DE 202007010743 U; 11.02.2008 DE 102008008465
(43) Veröffentlichungstag der Anmeldung: 03.03.2010
(73) Patentinhaber: Hahn-Schickard-Gesellschaft für angewandte Forschung e.V., 78052 Villingen-Schwenningen (DE)
(72) Erfinder: KÜCK, Heinz, 70437 Stuttgart (DE); MAYER, Volker, 73098 Rechberghausen (DE); FRITZ, Karl-Peter, 71034 Böblingen (DE)
(74) Vertreter: Stöckeler, Ferdinand
(86) Internationale Anmeldenummer: PCT/EP2008/005781
(87) Internationale Veröffentlichungsnummer: WO 2009/015768

(56) Entgegenhaltungen:
- DE-A1- 19 720 849
- DE-B- 1 176 435
- US-A- 4 212 313
- US-A1- 2006 090 792

## Beschreibung

Ausführungsbeispiele der vorliegenden Erfindung betreffen ein Schaltventil und ein Verfahren zum Schalten eines Schaltventils.

Schaltventile werden in vielen Anwendungen benötigt, die darauf ausgerichtet sind, den Durchfluss eines Fluids an- oder auszuschalten bzw. von einem Durchflussweg auf einen anderen Durchflussweg umzuschalten. Beispielsweise betrifft dies Anwendungen in der Automatisierungstechnik, der Pneumatik, der Prozesstechnik, der Automobiltechnik oder der Medizintechnik. Bei Anwendungen mit giftigen, aggressiven oder empfindlichen Fluiden, beispielsweise Chemikalien, Kraftstoffen oder Körperflüssigkeiten, kann die Lebensdauer des Schaltventils von einer guten Dichtfunktion der Fluidwege im Ventil abhängig sein. Eine Berührung von beispielsweise elektronischen Baugruppen, Widerständen, Spulen oder Biegewandlern mit dem Fluid kann zu Problemen führen, welche die Lebensdauer des Ventils verkürzen können. Diese Probleme können auch im Bereich der Biokompatibilität bestehen. Elektrische Baugruppen können beispielsweise Materialien enthalten, die nicht biokompatibel sind. Für eine Anwendung, bei der durch das Ventil beispielsweise Körperflüssigkeiten geschaltet werden sollen, ist es jedoch sehr wichtig, dass diese nur mit biokompatiblen Materialien in Berührung kommen. Im Rahmen eines medizinischen Zulassungsverfahrens kann es insbesondere vor dem Hintergrund der Biokompatibilität zu Problemen kommen, wenn das Fluid in Kontakt mit nicht biokompatiblen Materialien kommen kann. Günstigerweise ist das Ventil so ausgeführt, dass sich in dem Bereich des Ventils, der mit Fluid gefüllt ist oder der von dem Fluid berührt wird, nur solche Elemente des Ventils befinden, die gegenüber dem Fluid unempfindlich sind.

Bei bekannten Ventilen wird beispielsweise ein federbelasteter Bolzen gegen einen Ventilsitz gepresst, wobei der Bolzen zum Öffnen des Ventils mit Hilfe eines Elektromagneten vom Ventilsitz abgehoben werden kann.

Das Patent DE 3835788 A1 beschreibt beispielsweise ein schnell schaltendes Kugelventil, das eine in einem Ventilsitz sitzende Kugel aufweist, die durch eine quer zum Ventilsitz wirkende Betätigungsvorrichtung mit einem seitlichen Stoß vom Ventilsitz gelöst werden kann. Eine Zurückführung der Kugel in den Ventilsitz wird durch eine daraufhin einsetzende Strömung bewirkt, welche die Kugel mitreißt und wieder auf ihren Ventilsitz zurückführt. Jedoch ist es mit DE 3835788 A1 nicht möglich, zwei gleichwertige fluidische Zustände anzusteuern und diese ohne weiteren Energieverbrauch beizubehalten. Vielmehr ist DE 3835788 A1 daraufhin ausgelegt, ein schnelles Umschalten zwischen zwei fluidischen Zuständen zu bewirken und dies mittels kurzer Schaltzeiten und hoher Wiederholfrequenz zu erreichen. Somit wird in DE 3835788 A1 stets ein fluidischer Zustand, nämlich der des geschlossenen Ventils, bevorzugt und für eine kurzzeitige Öffnung des Ventils ist ein Einsatz von Energie erforderlich.

Aus DE 19734845 C1 ist ein schnell schaltendes Ventil bekannt, das einen Raum, der eine Zustromöffnung und eine Abstromöffnung aufweist, und einen Ventilsitz enthält, der von einem bewegbaren Ventilkörper verschließbar ist, auf ein Betätigungssignal hin öffnet und wieder verschließt. Dabei wird der von einem Aktuator getragene Ventilsitz auf das Betätigungssignal hin schneller von dem Ventilkörper weg bewegt, als der Ventilkörper zu folgen vermag. Auch in diesem schnell schaltenden Ventil ist der Zustand des geschlossenen Ventils bevorzugt, während der Zustand des geöffneten Ventils nur unter Zuführung von Energie mittels des Aktuators kurzzeitig eingenommen wird. Befindet sich der Aktuator innerhalb der Fluidkammer, so ist weiterhin mit Verschleiß der elektronischen Komponenten bzw. der elektrischen Leitungen des Aktuators zu rechnen. Befindet sich der Aktuator außerhalb der Fluidkammer, so ist aufgrund der schlagartigen Bewegung des Ventilsitzes, um die Massenträgheit des Ventilkörpers zu nutzen, mit einem Verschleiß beispielsweise der Zustromöffnung und der Abstromöffnung, die als flexible Leitungen ausgeführt sind, zu rechnen. Weiterhin handelt es sich bei DE 19734845 C1 um ein selbst verschließendes Ventil, das durch den Fluidstrom wieder geschlossen wird. Wenn ein kontinuierlicher Durchfluss realisiert werden soll, kann dies nur durch eine permanente Bestromung des Aktuators bewirkt werden, um z. B. eine oszillierende Bewegung des Ventilsitzes zu erzielen. Das Schaltventil kann somit nicht zwei oder mehrere definierte Schaltpositionen einnehmen.

Aus DE 117643 B ist ein ventil gemäß dem oberbegriff des Anspruchs 1 bekannt.

Die Aufgabe der vorliegenden Erfindung besteht darin, ein verschleißarmes Ventil zu schaffen.

Die vorliegende Aufgabe wird durch ein Schaltventil mit einem Fluidgehäuse, mindestens einem Schaltelement innerhalb des Fluidgehäuses und einer Betätigungseinrichtung außerhalb des Fluidgehäuses gemäß Anspruch 1 oder ein Verfahren zum Schalten eines Schaltventils gemäß Anspruch 15 gelöst.

Aufgrund der Konstruktion des Schaltventils, bei dem das Schaltelement innerhalb des Fluidgehäuses und die Betätigungseinrichtung außerhalb des Fluidgehäuses angebracht sind, kann das Schaltventil verschleißarm arbeiten, da die Betätigungseinrichtung, die beispielsweise empfindliche elektronische oder mechanische Komponenten aufweisen kann, nicht mit dem möglicherweise aggressiven Fluid in Berührung kommt.

Das Schaltventil umfasst ein Betätigungseinrichtung, die ausgebildet ist, um mittels einer stoßartigen Krafteinwirkung auf das Fluidgehäuse eine impulsartige Kraftübertragung auf das Schaltelement zu bewirken, um das Schaltelement von einer ersten Stellung in eine zweite Stellung zu bewegen, wobei das Schaltelement in der ersten Stellung einen ersten fluidischen Zustand eines Fluidwegs durch das Fluidgehäuse festlegt und wobei das Schaltelement in der zweiten Stellung einen zweiten fluidischen Zustand eines Fluidwegs durch das Fluidgehäuse festlegt, der sich von dem ersten fluidischen Zustand unterscheidet.

Ein Kerngedanke der Erfindung besteht darin, eine stoßartige Krafteinwirkung der Betätigungseinrichtung auf das Schaltelement mittels Impulsübertragung über die Fluidgehäusewand zu übertragen, um eine räumliche Trennung von Schaltelement und Betätigungseinrichtung zu erlauben, so dass die Betätigungseinrichtung nicht gegenüber aggressiven Fluiden geschützt werden braucht. Eine Trennung der Betätigungsfunktion des Schaltventils von der Schaltfunktion des Schaltventils lässt besonders verschleißarme Ausführungen des Schaltventils zu.

Das Schaltelement kann innerhalb des Fluidgehäuses zwei gleichwertige Stellungen einnehmen, wobei jede der zwei Stellungen durch einen bestimmten fluidischen Zustand gekennzeichnet ist. Beispielsweise kann die erste Stellung einem geöffneten Ventil entsprechen, während die zweite Stellung einem geschlossenen Ventil entsprechen kann. Ein geöffnetes Ventil kann beispielsweise durch einen ersten fluidischen Zustand beschrieben werden, während ein geschlossenes Ventil durch einen zweiten fluidischen Zustand beschrieben werden kann. Sowohl die erste Stellung als auch die zweite Stellung können durch eine stoßartige Krafteinwirkung auf das Fluidgehäuse mit der Betätigungseinrichtung eingenommen werden. Keine der zwei Stellungen ist eine bevorzugte Stellung, so dass eine einmal eingenommene Stellung von dem Ventil so lange beibehalten wird, bis der Betätigungseinrichtung weiter Energie zugeführt wird, um durch einen erneuten Stoß auf das Fluidgehäuse die Stellung des Schaltelements zu wechseln.

Ein eingenommener fluidischer Schaltzustand kann ohne weiteren Energieverbrauch beibehalten werden. Eine Energiezufuhr ist zum Umschalten zwischen zwei fluidischen Schaltzuständen, die zwei fluidischen Zuständen, beispielsweise fluidischen Widerständen zugeordnet sind, notwendig. Nach einem Umschaltvorgang kann die Energiezufuhr unterbrochen oder abgeschaltet werden bis ein erneutes Umschalten gewünscht wird.

Aufgrund der Medientrennung von Schaltelement und Betätigungseinrichtung, wobei das Schaltelement innerhalb des Fluidgehäuses angeordnet ist und die Betätigungseinrichtung außerhalb des Fluidgehäuses, kann das Schaltventil unempfindlich gegenüber Abnutzungserscheinungen, die durch das Fluid verursacht werden können, ausgeführt sein. Da die wesentlichen Komponenten des Antriebs innerhalb der Betätigungseinrichtung untergebracht sein können, wobei die Betätigungseinrichtung außerhalb des Fluidgehäuses angeordnet ist, kommen die elektronischen Komponenten der Betätigungseinrichtung nicht mit dem Fluid in Berührung. Auch ist es nicht erforderlich, flexible, d. h. bewegliche Zuführschläuche für die Ankopplung des Fluids an das Schaltventil zu verwenden, da das Schaltventil zum Schalten der zwei fluidischen Zustände keine Fluidgehäusebewegung auszuführen braucht. Insofern kann der Fluidweg durch das Fluidgehäuse beispielsweise mit verschleißarmen, idealerweise verschleißfreien Anschlusselementen ausgeführt werden.

Unter einem n/m-Wege-Ventil versteht man ein Ventil mit n Ein- und Auslässen und insgesamt m Schaltzuständen. Die im Folgenden beschriebenen Varianten sind unter anderem als 2/2-Wegeventile und 3/2-Wegeventile realisierbar, wobei das fluidische Schaltelement jeweils einen der zwei Schaltzustände bestimmt und das Wandlerelement außer im Zeitraum des Schaltvorgangs keine Energie verbraucht. Für alle Ausführungsbeispiele der Ventile wird beispielhaft angenommen, dass eine Kugel als fluidisches Schaltelement eingesetzt wird und die Kugel für beide Schaltzustände ihre Position in Positionselementen selbstzentrierend einnimmt.

Bevorzugte Ausführungsbeispiele der vorliegenden Erfindung werden nachfolgend Bezug nehmend auf die beiliegenden Zeichnungen näher erläutert. Es zeigen:

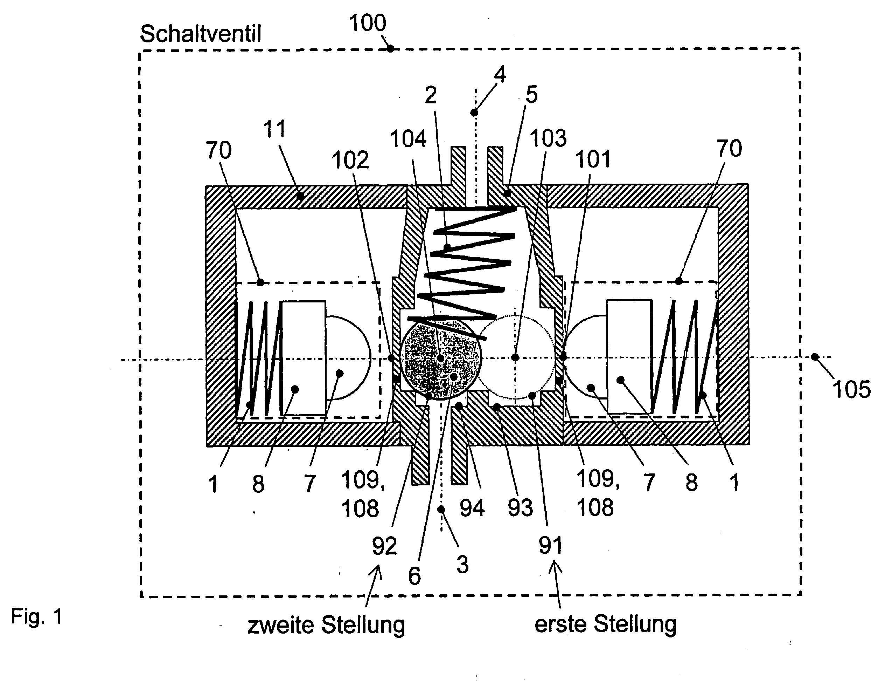

- Fig. 1: einen schematischen Längsschnitt durch das Schalt- ventil gemäß einem Ausführungsbeispiel;
- Fig.: 2a/b einen schematischen Querschnitt/Längsschnitt durch das Schaltventil gemäß einem weiteren Ausführungs- beispiel;
- Fig.: 3a/b einen schematischen Querschnitt/Längsschnitt durch das Schaltventil gemäß einem weiteren Ausführungs- beispiel;
- Fig.: 4a/b einen schematischen Querschnitt/Längsschnitt durch das Schaltventil gemäß einem weiteren Ausführungs- beispiel;
- Fig.: 5a/b einen schematischen Querschnitt/Längsschnitt durch das Schaltventil gemäß einem weiteren Ausführungs- beispiel;
- Fig. 6: einen schematischen Querschnitt durch das Schalt- ventil gemäß einem weiteren Ausführungsbeispiel;
- Fig. 7: einen schematischen Querschnitt durch das Schalt- ventil gemäß einem weiteren Ausführungsbeispiel;
- Fig.: 8a/b einen schematischen Längsschnitt durch das Schalt- ventil gemäß einem weiteren Ausführungsbeispiel mit dem Schaltelement in einer ersten/zweiten Stellung;
- Fig.: 9a/b einen schematischen Längsschnitt/Querschnitt durch das Schaltventil gemäß einem weiteren Ausführungs- beispiel;
- Fig. 10: einen schematischen Längsschnitt durch das Schalt- ventil gemäß einem weiteren Ausführungsbeispiel;
- Fig. 11: einen schematischen Längsschnitt durch das Schalt- ventil gemäß einem weiteren Ausführungsbeispiel;
- Fig. 12: einen schematischen Längsschnitt durch das Schalt- ventil gemäß einem weiteren Ausführungsbeispiel;
- Fig. 13: eine Darstellung eines Verfahrens zum Schalten ei- nes Schaltventils und;
- Fig. 14: eine schematische Darstellung eines Querschnitts durch ein Mehrfachschaltventil gemäß einem Ausfüh- rungsbeispiel.

Fig. 1 zeigt einen schematischen Längsschnitt durch ein Schaltventil 100 gemäß einem Ausführungsbeispiel. Das Schaltventil 100 umfasst ein Fluidgehäuse 5, ein Schaltelement 6 innerhalb des Fluidgehäuses 5 und eine Betätigungseinrichtung 70 außerhalb des Fluidgehäuses 5. Das Fluidgehäuse 5 kann von einem Fluid durchströmt werden, wenn ein Fluidweg 3, 4, der bei diesem Ausführungsbeispiel durch einen fluidischen Einlass 4 und einen fluidischen Auslass 3 bestimmt ist, einen ersten fluidischen Zustand aufweist, der beispielsweise eine Öffnung des Ventils beschreibt, so dass das Fluid frei von dem fluidischen Einlass 4 zu dem fluidischen Auslass 3 hindurchströmen kann. Befindet sich das Schaltelement 6 hingegen in einer zweiten Stellung 92, so kann es einen zweiten fluidischen Zustand des Fluidwegs 3, 4 durch das Fluidgehäuse 5 festlegen, der sich von dem ersten fluidischen Zustand unterscheidet, und beispielsweise ein geschlossenes Schaltventil 100 beschreibt.

Im Folgenden wird die erste Stellung mit dem Bezugszeichen 91 und die zweite Stellung mit dem Bezugszeichen 92 bezeichnet. Dies soll keine Bevorzugung zum Ausdruck bringen. Es wäre auch möglich, die erste Stellung 91 als zweite Stellung zu bezeichnen und die zweite Stellung 92 als erste Stellung zu bezeichnen.

Das Schaltelement 6 wird mittels einer stoßartigen Krafteinwirkung auf das Fluidgehäuse 5 durch die Betätigungseinrichtung 70 von einer der zwei Stellungen 91, 92 in die andere der zwei Stellungen 91, 92 geschaltet. Zur Impulsübertragung der Betätigungseinrichtung 70 über das Fluidgehäuse 5 auf das Schaltelement 6 ist das Fluidgehäuse 5 derart ausgeformt, dass es zwei Positionselemente 93, 94 aufweist, die das Schaltelement 6 stabil in der ersten Stellung 91 (durch ein erstes Positionselement 93) oder in der zweiten Stellung 92 (durch ein zweites Positionselement 94) positionieren. Beispielsweise können die Positionselemente 93, 94 als Taschen ausgeformt sein, um das Schaltelement 6 aufzunehmen. Das zweite Positionselement 94 kann auch als ein Dichtsitz ausgeformt sein, um eine Abdichtung zum fluidischen Auslass 3 hin zu bewirken.

Bei einer stabilen Positionierung des Schaltelements 6 in der ersten Stellung 91 kann das Schaltelement 6 sich beispielsweise in einem geringen Abstand von der rechten Seite des Fluidgehäuses 5 befinden, so dass bei einem Stoß der Betätigungseinrichtung 70 auf die Außenwand des Fluidgehäuses 5 an einem ersten Gehäuseaußenpunkt 101 der Impuls der Betätigungseinrichtung 70 nahezu verlustfrei auf das Schaltelement 6 übertragen werden kann. Das Schaltelement 6 kann die mittels Impuls übertragene Energie dazu verwenden, um sich von der ersten Stellung 91 in die zweite Stellung 92 zu bewegen. Der Bereich des Fluidgehäuses 5, über den die Energie des Impulses übertragen wird, kann auch als Transmitter 108, 109 bezeichnet werden:

Im Folgenden wird ein Transmitter im Bereich eines als starre Wand ausgebildeten Fluidgehäuses 5 mit dem Bezugszeichen 109 bezeichnet und ein Transmitter im Bereich eines als Membran ausgebildeten Fluidgehäuses 5 mit dem Bezugszeichen 108 bezeichnet.

Die durch den Impuls übertragene Energie kann das Schaltelement 6 dazu nutzen, um einen Potentialwall an potentieller Energie, der das Schaltelement 6 in einer der zwei Stellungen 91, 92 beharren lässt, sowie weitere Kräfte, die das Schaltelement 6 am Verlassen der jeweiligen Stellung 91, 92 hindern, zu überwinden, um sich von der ersten Stellung 91 in die zweite Stellung 92 zu bewegen. Der Potentialwall an potentieller Energie kann beispielsweise durch ein Halteelement 2 erzeugt werden, das beispielsweise eine oder mehrere Federn aufweist, um das Schaltelement 6 innerhalb des Fluidgehäuses 5 zu halten. Eine Auslenkung der einen oder mehreren Federn in der ersten Stellung 91 oder in der zweiten Stellung 92 kann beispielsweise eine maximal mögliche Länge, die innerhalb des Fluidgehäuses 5 möglich ist, aufweisen. Eine damit einhergehende Entspannung der einen oder mehreren Federn unter Beibehaltung der Federelastizität stellt ein Minimum der potentiellen Energie dar und sorgt für eine stabile Positionierung des Schaltelements 6 in der jeweils eingenommenen ersten Stellung 91 oder zweiten Stellung 92.

Andere Kräfte, die das Schaltelement 6 am Verlassen einer der Stellungen 91, 92 hindern, können beispielsweise Reibungskräfte oder durch das Fluid erzeugte Kräfte sein. Zur Überwindung dieser Kräfte sowie der Kraft, die durch das beispielsweise als ein oder mehrere Federn ausgebildete Halteelement 2 auf das Schaltelement 6 ausgeübt werden, ist eine im Wesentlichen als Losbrechenergie bezeichnete Energie notwendig, die von der Betätigungseinrichtung 70 auf das Schaltelement 6 übertragen werden kann.

Zur optimalen Impulsübertragung von der Betätigungseinrichtung 70 auf das Schaltelement 6 ist es vorteilhaft, wenn die Stoßübertragung idealerweise an einem ersten Gehäuseaußenpunkt 101 oder an einem zweiten Gehäuseaußenpunkt 102 erfolgt, wobei beide Gehäuseaußenpunkte 101, 102 auf einer Betätigungsachse 105 liegen, die durch einen ersten Schwerpunkt 103 des sich in der ersten Stellung 91 befindlichen Schaltelements 6 und einen zweiten Schwerpunkt 104 des sich in der zweiten Stellung befindlichen Schaltelements 6 gebildet wird. Unter realen Bedingungen erfolgt der Stoß nicht immer an dem ersten 101 oder dem zweiten Gehäuseaußenpunkt 102, sondern in einem, je nach'Ausführung der Betätigungseinrichtung 70 und des Schaltelements 6, d.h. entsprechend ihrer Fertigungstoleranzen, kleineren oder größeren Bereich um die beiden Gehäuseaußenpunkte 101, 102. Auch liegen beide Gehäuseaußenpunkte 101, 102 unter realen Bedingungen nicht notwendigerweise auf der Betätigungsachse 105.

Bei einem weiteren Ausführungsbeispiel kann aber auch eine Impulsübertragung stattfinden, wenn die Gehäuseaußenpunkte 101, 102 und die Schwerpunkte 103, 104 des sich in der ersten Stellung 91 und der zweiten Stellung 92 befindlichen Schaltelements 6 sich nicht auf der Betätigungsachse 105 befinden. Allerdings ist für dieses Ausführungsbeispiel mit einer weniger effizienteren Energieübertragung der Betätigungseinrichtung 70 auf das Schaltelement 6 zu rechnen, so dass beispielsweise für das Losbrechen des Schaltelements 6 aus einer der zwei Stellungen 91, 92 eine höhere Energie als die Losbrechenergie erforderlich sein kann.

Bei dem Ausführungsbeispiel gemäß Fig. 1 ist ersichtlich, dass das Schaltelement 6, das erfindungsgemäß als kugelförmiger Gegenstand ausgebildet ist, eine Dichtungsfunktion und eine Anlegefunktion aufweisen kann. Eine Dichtungsfunktion kann das Schaltelement 6 beispielsweise dadurch aufweisen, dass es bei Einnahme der zweiten Stellung 92 den Fluidweg 3, 4 am fluidischen Auslass 3 sperrt bzw. abdichtet. Eine Anlegefunktion kann das Schaltelement 6 beispielsweise dadurch aufweisen, dass es bei Einnahme der zweiten Stellung 92 an der Innenwand des Fluidgehäuses 5 anliegen kann oder sich in der Nähe der Innenwand befinden kann, um einen Impuls der Betätigungseinrichtung 70 zu übertragen. Das Schaltelement 6 ist bei diesem Ausführungsbeispiel ausgebildet, um eine Dichtungstoleranz und eine Anlegetoleranz an verschiedenen Stellen aufzuweisen. Als Dichtungstoleranz und Anlegetoleranz sind hierbei Fertigungstoleranzen zu verstehen, die eine bestimmte Genauigkeit der Fertigung des Schaltelements 6 an den Stellen vorschreiben, an denen die Dichtungstoleranz und die Anlegetoleranz spezifiziert sind. Um sowohl den fluidischen Auslass 3 zu sperren, als auch an der Innenwand des Fluidgehäuses 5 anzuliegen, ist beispielsweise eine hohe Fertigungsgenauigkeit des Schaltelements 6 an einer Anlegestelle und an einer Dichtungsstelle zu fordern.

Die Betätigungseinrichtung 70 ist erfindungsgemäß außerhalb des Fluidgehäuses 5 untergebracht. Beispielsweise kann sich die Betätigungseinrichtung 70 innerhalb eines Ventilgehäuses 11 befinden, welches ein Gehäuse sein kann, das das Fluidgehäuse 5 und die Betätigungseinrichtung 70 umfasst. Die damit bewirkte Medientrennung ist besonders vorteilhaft im Hinblick auf die Gestaltung der Betätigungseinrichtung 70, da deren elektronische Bauelemente nicht in direktem Kontakt mit dem Fluid treten brauchen, so dass mit einer verbesserten Verschleißunanfälligkeit gerechnet werden kann.

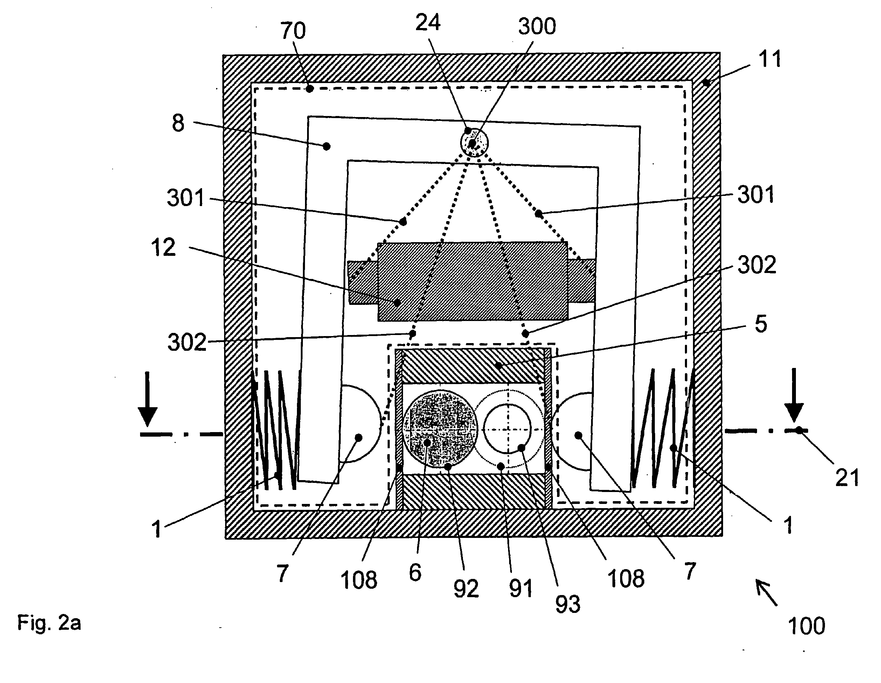

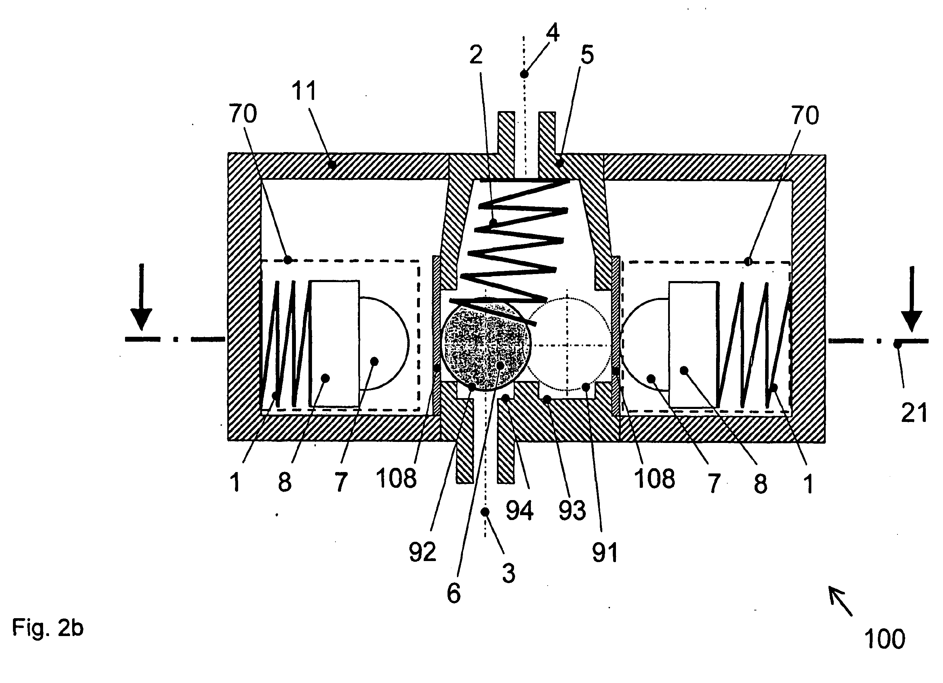

Bei dem in Fig. 1 gezeigten Ausführungsbeispiel kann die Betätigungseinrichtung 70 ein Kontaktelement 7, ein Mitnehmerelement 8 und einen Energiespeicher 1 umfassen, wie nachfolgend bezugnehmend auf die Fig. 2a und 2b näher erläutert wird.

Fig. 2a zeigt einen schematischen Querschnitt durch das Schaltventil 100 gemäß einem weiteren Ausführungsbeispiel. In dem Fluidgehäuse 5, das beispielsweise mit dem Ventilgehäuse 11 verbunden sein kann, kann sich ein Schaltelement 6 befinden, das die Form einer Kugel aufweist, sowie ein erstes Positionselement 93, das beispielsweise in der ersten Stellung 91 als eine Tasche ausgeformt sein kann, und ein zweites Positionselement 94, das beispielsweise in der zweiten Stellung 92 als ein Dichtsitz ausgeformt sein kann. Das Halteelement 2 kann beispielsweise durch eine oder mehrere Federn gebildet werden. Das Fluidgehäuse 5 weist bei diesem Ausführungsbeispiel an der Stelle der Impulsübertragung von der Betätigungseinrichtung 70 zu dem Schaltelement 6, die auch als Transmitter 108 bezeichnet werden kann, eine spezielle Formgestaltung auf, die als eine Membran ausgebildet sein kann. Weitere Elemente des Fluidgehäuses 5 können ein fluidischer Einlass 4 und ein fluidischer Auslass 3 sein. Zum Ausüben des Schaltvorgangs des Schaltelements 6 können sich im Ventilgehäuse 11 beispielsweise ein Mitnehmerelement 8, ein Wandlerelement 12 und zwei Kontaktelemente 7 befinden.

Weiterhin sind bei diesem Ausführungsbeispiel zwei Energiespeicher 1 dargestellt, die beispielsweise als vorspannbare Federn ausgeführt sein können.

Die Betätigungseinrichtung 70 kann beispielsweise ein Wandlerelement 12 und ein Kontaktelement 7 umfassen. Das Wandlerelement 12 kann beispielsweise der Wandlung einer Energie aus einer bereitgestellten Energiequelle in eine Bewegungsenergie dienen. Das Kontaktelement 7 kann zum Inkontaktbringen des Kontaktelements mit dem Fluidgehäuse 5 dienen, um die impulsartige Kraftübertragung auf das Schaltelement 6 zu bewirken. Weiterhin kann die Betätigungseinrichtung 70 ein Mitnehmerelement 8 aufweisen. Das Mitnehmerelement 8 kann beispielsweise zur Übertragung der von dem Wandlerelement 12 gewandelten Bewegungsenergie auf das Kontaktelement 7 dienen, wobei das Mitnehmerelement 8 mit dem Kontaktelement 7 verbunden sein kann. Das Mitnehmerelement 8 kann auch zur Befestigung der Betätigungseinrichtung 70 an dem Fluidgehäuse 5 oder an einem das Fluidgehäuse 5 und die Betätigungseinrichtung 70 umfassenden Ventilgehäuse 11 dienen.

Es ist vorstellbar, dass das Mitnehmerelement 8 und das Wandlerelement 12 eine Einheit bilden. Die Energiespeicher 1 sind nicht zwingend für die Funktion des Schaltventils 100 erforderlich. Es ist vorstellbar, dass die Energiespeicher 1 entweder mit dem Wandlerelement 12 oder dem Mitnehmerelement 8 eine Einheit bilden. Das Mitnehmerelement 8 kann in diesem Beispiel eine Drehbewegung vollführen. Die Kontaktelemente 7 können mit dem Mitnehmerelement 8 verbunden sein und zusammen mit dem Mitnehmerelement 8 eine Masse darstellen. Es ist vorstellbar, dass die Kontaktelemente 7 mit dem Mitnehmerelement 8 eine Einheit bilden. Das Mitnehmerelement 8 kann sich über einen bestimmten Winkelbereich bewegen, ohne dass es zu einem Kontakt zwischen den Kontaktelementen 7 und dem Fluidgehäuse 5 an den Transmitterstellen 108 kommt. Das Wandlerelement 12 kann aus einer elektrischen, piezoelektrischen, hydraulischen oder pneumatischen Energiequelle Energie aufnehmen und eine Kraft in mindestens einer der Drehrichtungen des Mitnehmerelements 8 erzeugen. Das Mitnehmerelement 8 kann mit dem Wandlerelement 12 so gekoppelt sein, dass die Krafteinwirkung des Wandlerelements 12 auf das Mitnehmerelement 8 zu einer Drehbewegung des Mitnehmerelements 8 und der Kontaktelemente 7 in der entsprechenden Drehrichtung führen kann.

Das Mitnehmerelement 8 kann beispielsweise ein Lager 24 oder ein Gelenk 15 aufweisen, wobei die Bewegungsenergie des Wandlerelements 12 von einem ersten Hebelarm 301 des Mitnehmerelements 8 über einen zweiten Hebelarm 302 des Mitnehmerelements 8 auf das Kontaktelement 7 übertragen werden kann. Eine gemeinsame Hebelachse 300 von dem ersten Hebelarm 301 und dem zweiten Hebelarm 302 kann durch eine Achse des Lagers 24 oder des Gelenks 15 festgelegt sein.

Im Ruhezustand, d. h. zwischen zwei Schaltvorgängen, kann sich das Mitnehmerelement 8 in einer Winkelstellung zwischen den beiden jeweils größtmöglichen Drehwinkeln einer Drehrichtung, die in diesem Beispiel durch die Transmitter 108 an den Membranen gegeben sind, befinden.

Für den Schaltvorgang des Schaltventils 100 kann das Wandlerelement 12 mit Energie versorgt werden und mindestens das Mitnehmerelement 8 zusammen mit den Kontaktelementen 7 antreiben, wobei eine Drehbewegung entsteht, die so gestaltet sein kann, dass in einer ersten Phase der Drehbewegung mindestens das Mitnehmerelement 8 und die Kontaktelemente 7 kinetische Energie aufnehmen können und dass in einer weiteren Phase der Drehbewegung diese kinetische Energie in einem Stoßvorgang durch eines der beiden Kontaktelemente 7 zumindest teilweise auf einen der Transmitter 108 an der Membran und das Schaltelement 6 übertragen werden kann. Das Schaltelement 6 kann sich daraufhin von einer ersten Stellung 91 in eine zweite Stellung 92 bewegen oder in der besagten ersten Stellung 91 verharren. Die erste Stellung 91 und die zweite Stellung 92 sind dabei durch die Ausgestaltung des Fluidgehäuses 5 in Form von Positionselementen 93, 94 bestimmt, welche das Schaltelement 6 stabil positionieren.

Der Schaltvorgang kann in verschiedenen Ausprägungen ablaufen. Zuerst kann beispielsweise die Bewegung so verlaufen, dass das Kontaktelement 7 von Anfang der Bewegung an unmittelbar bis zum Stoß in Richtung auf den besagten Transmitter 108 an der Membran bewegt wird. Eine weitere Möglichkeit besteht darin, die Bewegung so zu gestalten, dass das Kontaktelement 7 zunächst in entgegengesetzter Richtung, d. h. von dem zu kontaktierenden Transmitter 108 an der Membran weg bewegt wird, worauf auch mindestens einer der Energiespeicher 1 Energie aufnimmt, und die Bewegungsrichtung bei einem bestimmten Drehwinkel des Mitnehmerelements 8 umgekehrt wird und das Kontaktelement 7 sich nach der Umkehr auf den besagten Transmitter 108 an der Membran zu bewegt.

Durch den Stoßvorgang bei der Energieübertragung auf das Schaltelement 6 besteht die Möglichkeit, beispielsweise einen mindestens ausreichend großen Impuls auf das Schaltelement 6 zu erzeugen, so dass die Losbrechenergie aufgebracht werden kann. Für den Stoßvorgang ist es vorteilhaft, wenn sich das Schaltelement 6 vor dem Stoß in Kontakt mit dem zu kontaktierenden Transmitter 108 an der Membran befindet oder sich der zu kontaktierende Transmitter 108 an der Membran unter geringem Energieverbrauch beim Stoßvorgang verformen lässt, bis er in Kontakt mit dem Schaltelement 6 kommt. Der Energieübertrag kann beispielsweise am effizientesten sein, wenn der Stoß zentral erfolgt und die effektive Masse der bewegten Teile, d. h. im Wesentlichen des Mitnehmerelements 8 und der Kontaktelemente 7, etwa gleich groß wie die Masse des zu bewegenden Schaltelements 6 ist.

Fig. 2b zeigt einen schematischen Längsschnitt durch das Schaltventil 100 gemäß dem Ausführungsbeispiel. Dabei stellt die Schnittebene 21 die Ebene dar, durch die das Schaltventil 100 gemäß Fig. 2a geschnitten werden kann, um den schematischen Längsschnitt gemäß Fig. 2b zu erhalten. Durch den entsprechenden Schnitt stellt sich das Mitnehmerelement 8, das in Fig. 2a die Form eines Bügels aufweist, in Fig. 2b als zwei rechteckförmige Elemente 8 dar. Das Fluidgehäuse 5 weist an den Transmitterstellen 108, d. h. an den Stellen, an denen der Impuls von der Betätigungseinrichtung 70 auf das Schaltelement 6 übertragen wird, eine membranförmige Ausgestaltung auf. Das Mitnehmerelement 8 kann von einem als Federelement ausgebildeten Energiespeicher 1 beschleunigt werden, um mit dem Kontaktelement 7 auf die Membran des Fluidgehäuses 5 aufzuschlagen, um den Impuls an das Schaltelement 6 abzugeben, das von einer ersten Stellung 91 in eine zweite Stellung 92 wechseln kann. Das Schaltelement 6 wird bei diesem Ausführungsbeispiel von einem Halteelement 2, das als eine Feder ausgestaltet ist, in der ersten Stellung 91 oder in der zweiten Stellung 92 gehalten, wobei das Schaltelement 6 in der ersten Stellung 91 einen Fluidweg 3, 4 durch das Fluidgehäuse 5 freigeben kann (z.B. "Ventil offen") und in der zweiten Stellung 92 den Fluidweg 3, 4 durch das Fluidgehäuse 5 versperren kann (z.B. "Ventil geschlossen").

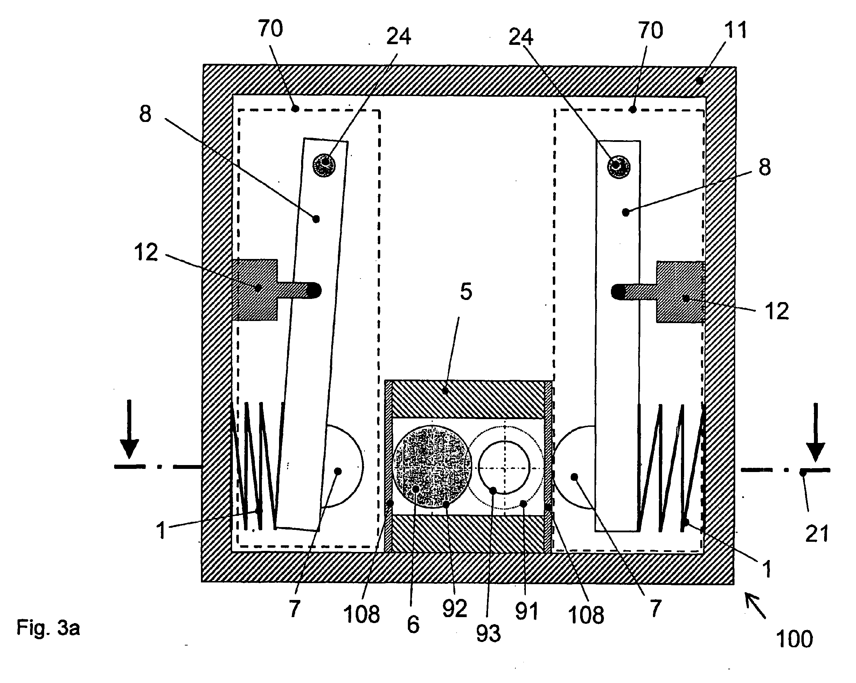

Fig. 3a zeigt einen schematischen Querschnitt durch das Schaltventil 100 gemäß einem weiteren Ausführungsbeispiel, was sich im Wesentlichen von dem Ausführungsbeispiel gemäß Fig. 2a und 2b dadurch unterscheidet, dass eine Antriebseinheit mit zwei Wandlerelementen 12 und zwei Mitnehmerelementen 8 verwendet werden kann. Das Mitnehmerelement 8 weist bei diesem Ausführungsbeispiel ein Lager 24 auf, wobei jedes der zwei Mitnehmerelemente 8 ein eigenes Lager 24 aufweisen kann. Mit dem Wandlerelement 12 kann das Mitnehmerelement 8 mittels einer Drehung um die Achse des Lagers 24 ausgelenkt werden, um bei der Auslenkung einen als vorspannbare Feder ausgebildeten Energiespeicher 1 mit der Losbrechenergie zu versorgen. Bei Entladung des Energiespeichers bzw. Entspannung der vorgespannten Feder kann die gespeicherte Losbrechenergie aus dem Energiespeicher 1 frei werden, um die stoßartige Krafteinwirkung auf das Fluidgehäuse 5 auszulösen.

Beispielsweise kann der Antriebsmechanismus als ein elektromagnetischer, elektrostatischer, piezoelektrischer, pneumatischer, hydraulischer Antrieb oder als ein manueller Antrieb mit mechanischer Übersetzung ausgebildet sein. Die vorspannbare Feder kann in entgegengesetzter Richtung der stoßartigen Krafteinwirkung auf das Fluidgehäuse 5 vorspannbar sein. Bei weiteren Ausführungsbeispielen kann das Wandlerelement 12 auch den notwendigen Impuls auf das Fluidgehäuse 5 ohne Verwendung eines Energiespeichers 1 abgeben und beispielsweise als ein piezoelektrischer Biegewandler, als ein piezoelektrischer Stack, als ein elektromagnetischer Antrieb, als ein elektrostatischer Antrieb, als ein pneumatischer Antrieb, als ein hydraulischer Antrieb oder als ein manueller Antrieb mit mechanischer Übersetzung ausgebildet sein.

Das Wandlerelement 12 braucht beispielsweise nicht permanent mit Energie versorgt zu werden. Eine Energieversorgung ist notwendig, um das Schaltelement 6 von einer der zwei Stellungen 91, 92 in die andere der zwei Stellungen 91, 92 zu bewegen. Nach Einnahme des gewünschten fluidischen Schaltzustands kann beispielsweise die Energieversorgung von dem Wandlerelement 12 entkoppelt werden.

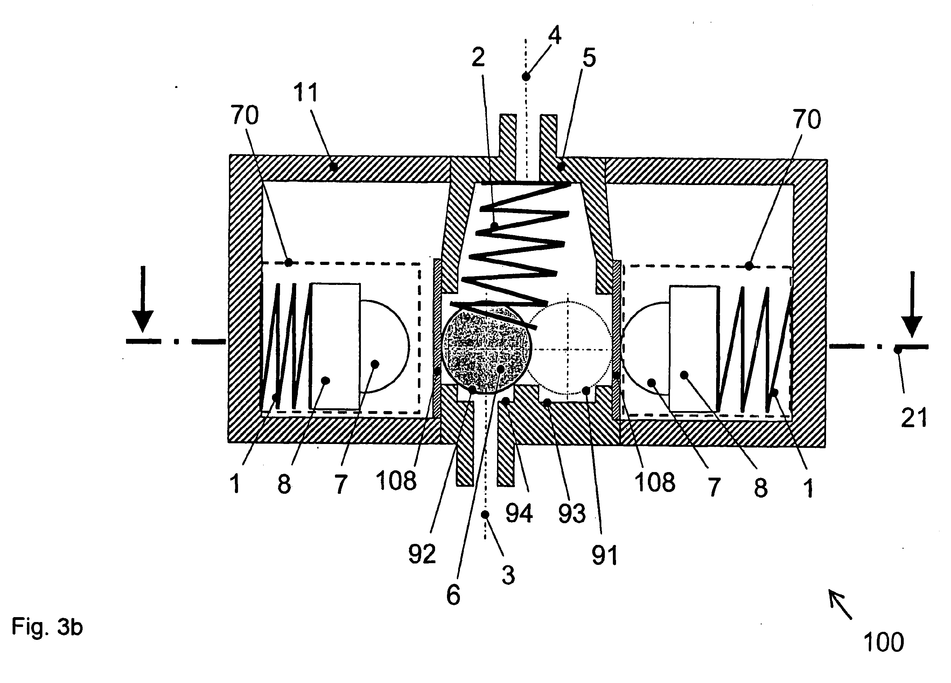

Fig. 3b zeigt einen schematischen Längsschnitt durch das Schaltventil 100 gemäß dem Ausführungsbeispiel. Bei diesem Längsschnitt ist kein Unterschied zu dem Ausführungsbeispiel gemäß Fig. 2b zu erkennen. Der Schnitt lässt nicht erkennen, dass das Mitnehmerelement 8 aus zwei separaten Teilen besteht und nicht wie bei dem zweiten Ausführungsbeispiel als ein einziges Teil ausgebildet ist. Während bei dem Ausführungsbeispiel gemäß Fig. 2a/b ein einziges Wandlerelement 12 die Energiewandlung übernimmt, geschieht die Energiewandlung bei dem Ausführungsbeispiel gemäß Fig. 3a/b mit zwei Wandlerelementen 12.

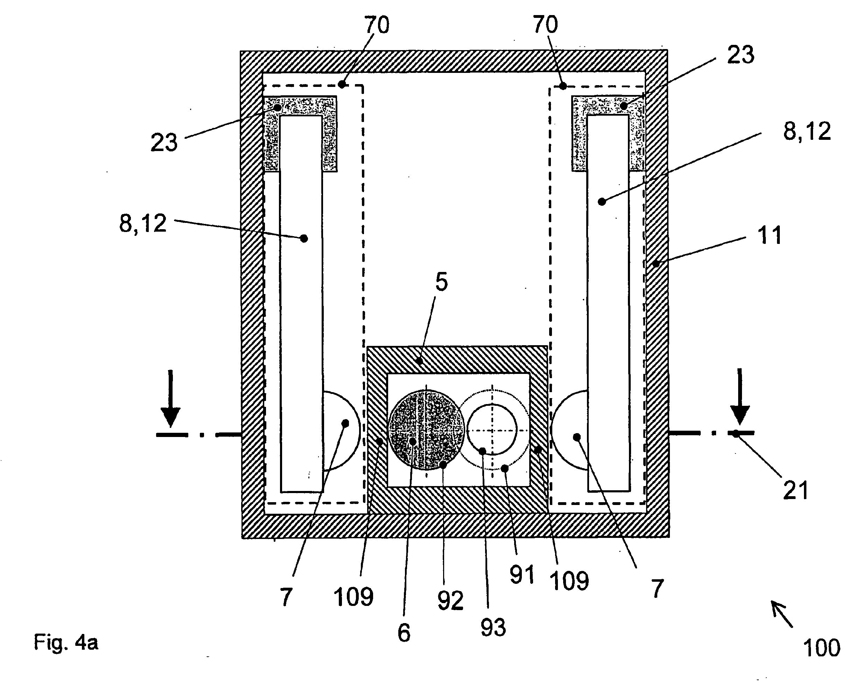

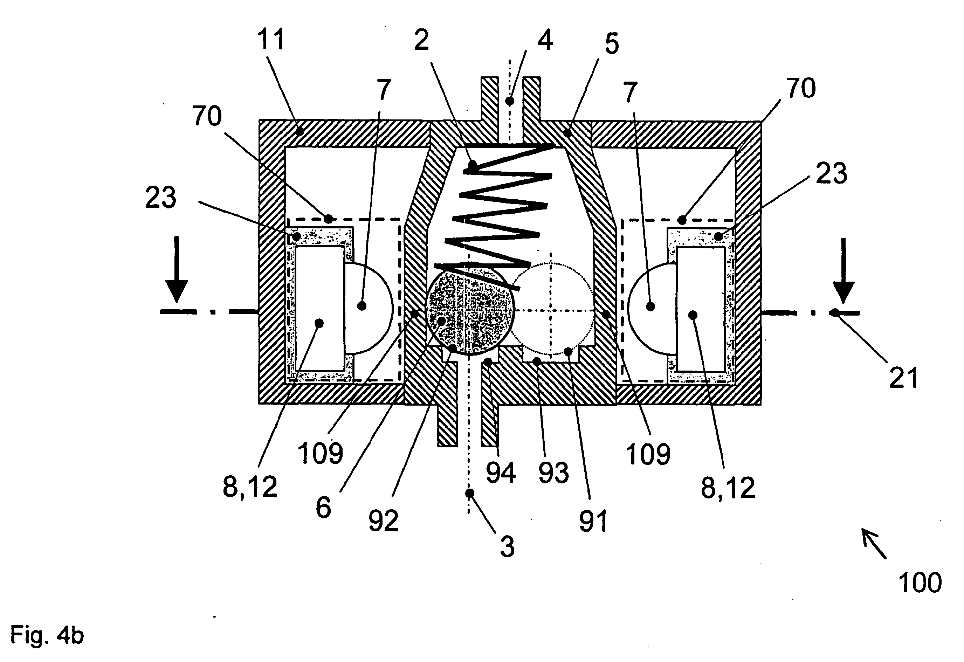

Fig. 4a zeigt einen schematischen Querschnitt durch das Schaltventil 100 gemäß einem weiteren Ausführungsbeispiel. Fig. 4a stellt eine Draufsicht dar, geschnitten an einer Schnittlinie 21 gemäß Fig. 4b. Bei diesem Ausführungsbeispiel umfasst die Betätigungseinrichtung 70 eine Impulserzeugungseinheit, die als Piezobiegewandler gewählt ist. Diese Wahl ist aber nicht von Bedeutung für das grundsätzliche Funktionsprinzip, welches in Fig. 4a/b dargestellt ist. Der Piezobiegewandler kann dabei sowohl das Wandlerelement 12 als auch das Mitnehmerelement 8 darstellen, und an einem Ende eingespannt sein und am anderen Ende das Kontaktelement 7 tragen. Das Fluidgehäuse 5 kann im Bereich des Transmitters 109, der ein Teil des Fluidgehäuses 5 sein kann, als eine starre Wand ausgebildet sein, wobei die starre Wand beispielsweise in der Lage ist, Druckwellen zu leiten, um den Impuls von der Betätigungseinrichtung 70 auf das Schaltelement 6 zu übertragen. Der Impuls kann im Bereich des Transmitters 109 auf die starre Wand abgegeben werden. Der Piezobiegewandler kann beispielsweise im Mitnehmerelement 8 bzw. Wandlerelement 12 integriert sein, um bei Anlegung einer Spannung eine Verformung auszubilden, um das Kontaktelement 7 gegen die starre Wand 109 des Fluidgehäuses 5 zu beschleunigen. Aufgrund der Materialeigenschaften der starren Wand wird beim Aufprall des Kontaktelements 7 auf den Transmitter 109 beispielsweise eine Druckwelle in der starren Wand 109 des Fluidgehäuses 5 erzeugt. Die dabei auftretende Verformung geschieht schlagartig, was eine effiziente Impulsweitergabe ermöglicht.

Das Mitnehmerelement 8 ist bei diesem Ausführungsbeispiel mittels einer Einspannung 23 zusammen mit dem Wandlerelement 12 an einem ersten Ende fest eingespannt. An einem zweiten Ende des Mitnehmerelements 8, das mit dem Kontaktelement 7 verbunden ist, ist das Mitnehmerelement 8 beweglich, um die Bewegungsenergie an dem zweiten Ende auf das Kontaktelement 7 zu übertragen, und den Impuls auf das Fluidgehäuse 5 abzugeben.

Fig. 4b zeigt einen schematischen Längsschnitt durch das Schaltventil 100 gemäß dem Ausführungsbeispiel. Fig. 4b stellt die Seitenansicht dar, geschnitten an der Schnittlinie 21 gemäß Fig. 4a.

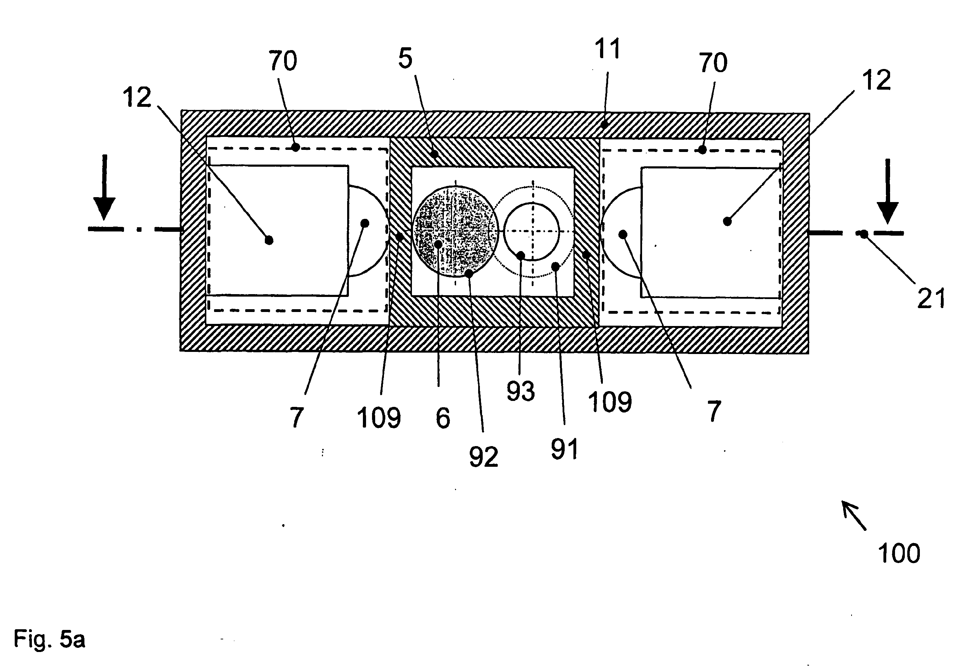

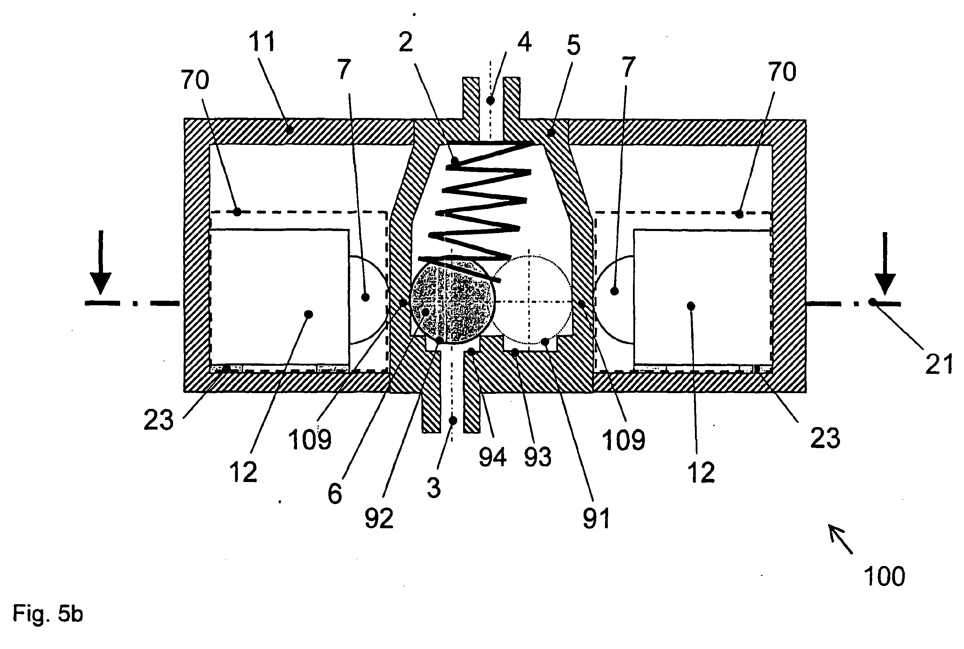

Fig. 5a stellt einen schematischen Querschnitt durch das Schaltventil 100 gemäß einem weiteren Ausführungsbeispiel dar. Fig. 5a stellt eine Draufsicht dar, geschnitten an der Schnittlinie 21 gemäß Fig. 5b. Die Darstellungen von Fig. 5a/b sind aus den Fig. 4a/b abgeleitet. Anstelle des Piezobiegewandlers gemäß Fig. 4a/b kann ein Piezostack als Wandlerelement 12 eingesetzt werden, demzufolge können die Abmessungen des Ventilgehäuses 11 verkleinert werden. Außerdem können beispielsweise die Mitnehmerelemente 8 weggelassen werden, wenn auf beiden Seiten des Fluidgehäuses 5 jeweils ein Wandlerelement 12 mit darauf aufgebrachten Kontaktelementen 7 angebracht sind. Des Weiteren kann eine angepasste Einspannung 23 vorgesehen werden.

Fig. 5b zeigt einen Längsschnitt durch das Schaltventil 100 gemäß dem Ausführungsbeispiel. Fig. 5b entspricht der Seitenansicht, geschnitten an der Schnittlinie 21 gemäß Fig. 5a. Bei diesem Ausführungsbeispiel ist das Fluidgehäuse 5 im Bereich des Transmitters 109 als eine starre Wand ausgebildet, so dass der Stoß von dem Piezostack des Wandlerelements 12 über das Kontaktelement 7 auf den Transmitter 109 des Fluidgehäuses 5 und weiter zum Schaltelement 6 übertragen werden kann. Durch die Nutzung eines Piezostacks als Wandlerelement 12 kann Platz eingespart werden. Auch die Einspannung 23 des Wandlerelements 12 kann kleiner ausgeführt sein als in den zuvor gezeigten Figuren.

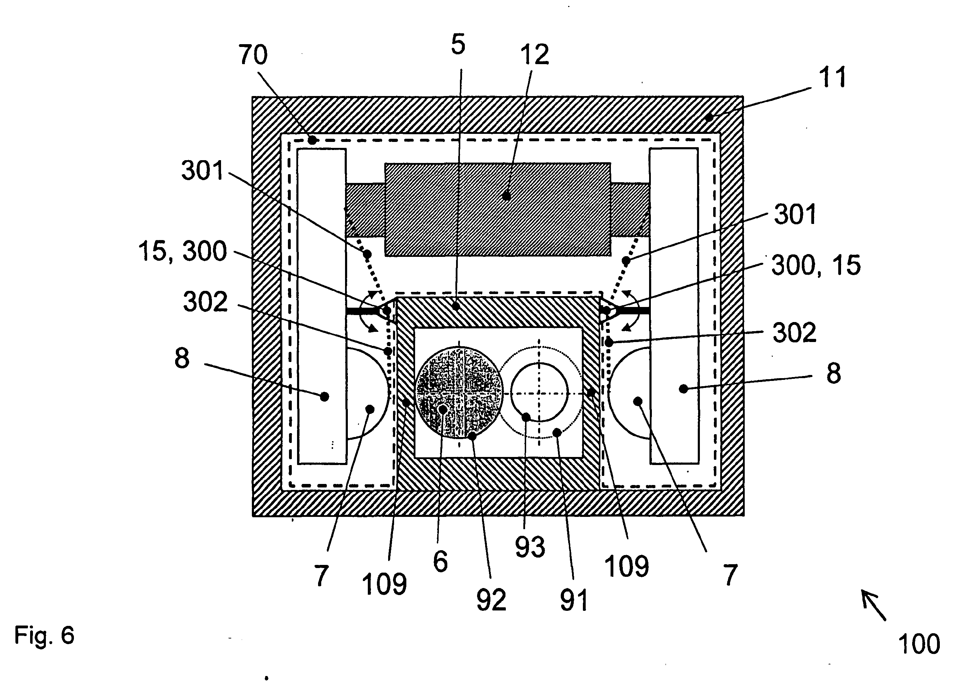

Fig. 6 zeigt einen schematischen Querschnitt durch das Schaltventil 100 gemäß einem weiteren Ausführungsbeispiel. Das Prinzip dieser Anordnung ist es, nur ein einziges Wandlerelement 12 zu verwenden, welches beispielsweise durch eine spezielle Konstruktion der Mitnehmerelemente 8 auf beide Transmitter 109 an der starren Wand gleichzeitig wirkt, so dass bei jeder Betätigung des Wandlerelements 12 das Schaltelement 6 in die nächste Stellung geschaltet werden kann. Die Mitnehmerelemente 8 können dabei über Festkörpergelenke 15 fixiert sein. Diese können beispielsweise am Fluidgehäuse 5 angebracht sein, sie können aber genauso gut auch an einer geeigneten Position am Ventilgehäuse 11 angebracht sein.

Eine Krafteinwirkung des Wandlerelements 12 auf das Mitnehmerelement 8 kann über einen ersten Hebelarm 301 auf einen zweiten Hebelarm 302 übertragen werden, um das Kontaktelement 7 an der starren Wand 109 im Transmitterbereich gegen das Fluidgehäuse 5 zu stoßen. Der erste Hebelarm 301 wird beispielsweise durch einen Krafteinwirkpunkt des Wandlerelements 12 auf das Mitnehmerelement 8 und eine Achse 300 des Gelenks 15 bzw. Festkörpergelenks gebildet. Der zweite Hebelarm 302 wird beispielsweise durch einen Krafteinwirkpunkt des Kontaktelements 7 auf das Fluidgehäuse 5 und die Achse 300 des Gelenks 15 gebildet.

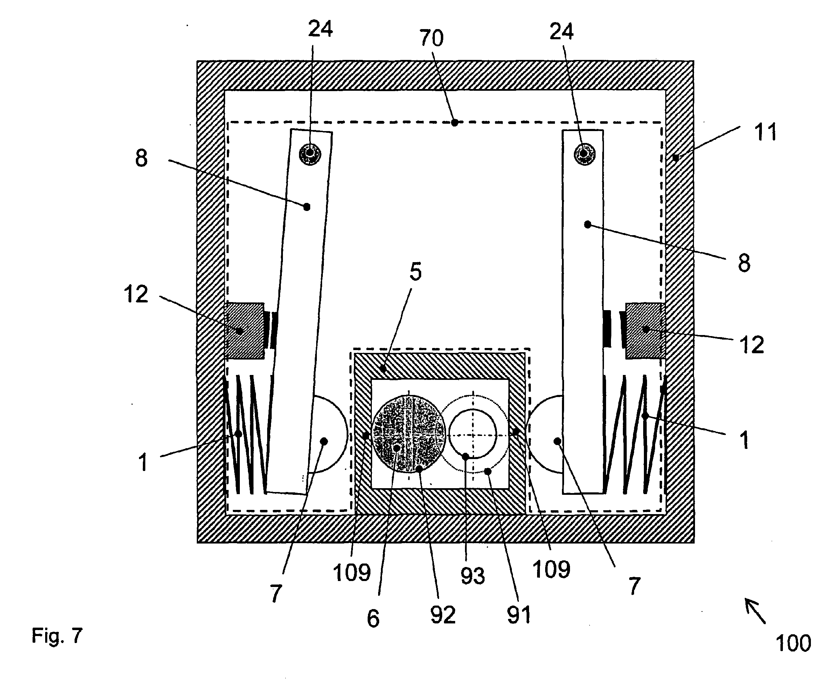

Fig. 7 zeigt einen Querschnitt durch das Schaltventil 100 gemäß einem weiteren Ausführungsbeispiel. Die Impulserzeugung kann dadurch geschehen, dass das Wandlerelement 12 zunächst das Mitnehmerelement 8 gegen einen Energiespeicher 1 vorspannt. Dann kann das Mitnehmerelement losgelassen werden, der Energiespeicher 1 kann das Mitnehmerelement 8 in die entgegengesetzte Richtung beschleunigen, so dass das Mitnehmerelement 8 auf den Transmitter 109 im Bereich der starren Wand prallen kann. Diese Anordnung ist auch ein gutes Beispiel dafür, dass das Wandlerelement 12 kein Piezoelement zu sein braucht, sondern z. B. ein elektromagnetischer Antrieb sein kann. Das Wandlerelement 12 kann beispielsweise für alle Aufbauvarianten nach einem beliebigen Antriebsprinzip arbeiten, z. B. elektromagnetisch, elektrostatisch, piezoelektrisch, pneumatisch, hydraulisch etc. Ebenso ist eine manuelle Betätigung mit mechanischer Übersetzung vorstellbar.

Ein weiterer Vorteil von Ausführungsbeispielen der Erfindung, beispielsweise von Ausführungsbeispielen gemäß Fig. 7, ist, dass auch ein Schaltventil 100 realisiert werden kann, das stromlos sicher geschlossen ist, d.h., wenn der Strom ausfällt, schließt das Ventil 100, sofern es nicht schon sowieso geschlossen ist. Dieser Aspekt kann für bestimmte Anwendungen, z.B. in der Automatisierungstechnik, sehr wichtig sein, um eine Anlage im Falle eines Stromausfalls in einen sicheren Zustand überführen zu können.

Denkbar ist beispielsweise ein Ausführungsbeispiel gemäß Fig. 7, wobei die Betätigungseinrichtung 70 auf der rechten Seite, die für einen Schaltvorgang ,,Schließen" des Ventils 100 verantwortlich ist, so ausgebildet ist, dass sie im bestromten Zustand stets vorgespannt ist, z.B. durch einen Elektromagneten, der das Mitnehmerelement 8 gegen die Feder 1 zieht. Fällt der Strom aus, schaltet die Betätigungseinrichtung 70 noch einmal, da der Elektromagnet das vorgespannte Mitnehmerelement 8 freigibt und im Fall eines geöffneten Ventils 100 wird dieses geschlossen. Im Fall eines schon geschlossenen Ventils 100 bleibt dieses geschlossen.

Dieser Fall eines stromlos geschlossenen Ventils 100 ist zwar mit einem erhöhten Energieaufwand verbunden, da die Betätigungseinrichtung 70 zum Schließen des Schaltventils 100 beispielsweise eine stete Stromversorgung benötigen kann, es kann aber Anwendungsfälle geben, wo dies aufgrund der dadurch erreichten höheren Arbeitssicherheit etc. in Kauf genommen wird.

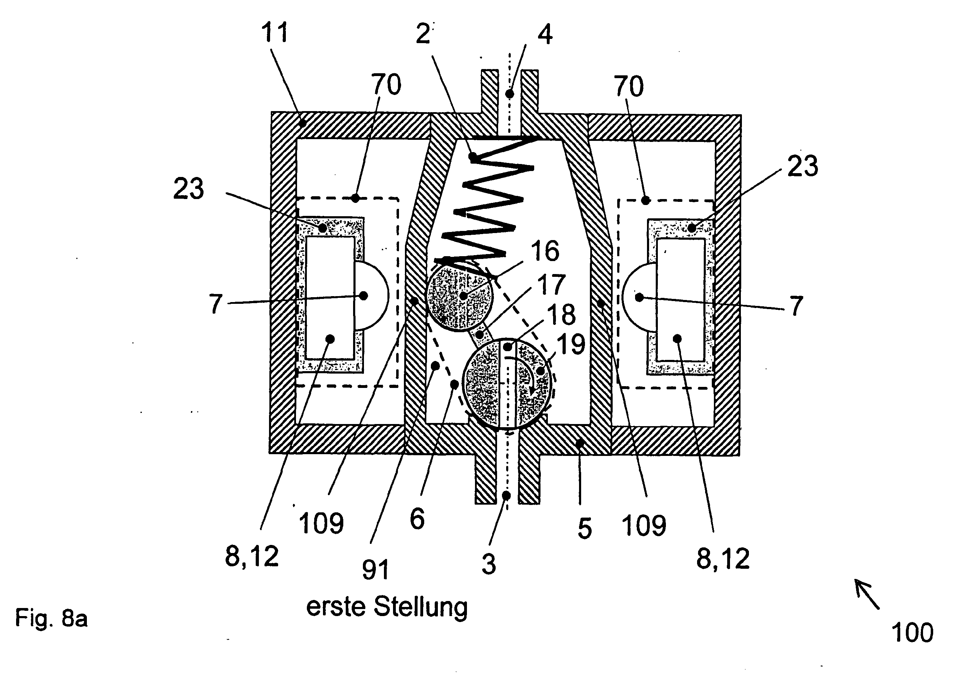

Fig. 8a zeigt einen Längsschnitt durch ein Schaltventil 100 gemäß einem weiteren Ausführungsbeispiel mit dem Schaltelement 6 in einer ersten Stellung 91. Bei diesem Ausführungsbeispiel entspricht die erste Stellung 91 dem geöffneten Schaltventil 100. Die Überlegung, die hinter dieser Anordnung steht, ist, dass aufgrund von Fertigungstoleranzen in den davor gezeigten Anordnungen beispielsweise nicht garantiert werden kann, dass das Schaltelement 6 gleichzeitig am Transmitter 109 der starren Wand anliegen kann und den fluidischen Auslass 3 dicht verschließen kann. Insbesondere die erste Forderung kann aber für den einwandfreien Betrieb des Schaltventils 100 unerlässlich sein. Daher kann bei diesem Ausführungsbeispiel die Dichtfunktion des Schaltelements 6 von der Anlagefunktion am Transmitter 109 der starren Wand entkoppelt werden, indem das Schaltelement 6 starr mit einem Impulsaufnehmer 16 verbunden wird und um eine Rotationsachse eines Rotationselements 19 drehbar gelagert sein kann. Bei Betätigung beispielsweise des linken Wandlerelements 12 kann der vom Kontaktelement 7 übertragene Impuls vom Impulsaufnehmer 16 aufgenommen werden, um den Impulsaufnehmer 16 beispielsweise nach rechts zu beschleunigen und um dabei das Schaltelement 6, das über ein starres Verbindungselement 17 mit dem Impulsaufnehmer 16 gekoppelt sein kann, in der Weise zu verdrehen, dass der Durchfluss des Fluids durch eine Bohrung 18 im Schaltelement 6 und den daran anschließenden fluidischen Auslass 3 unterbrochen ist. Der Öffnungsvorgang kann analog erfolgen durch eine Betätigung beispielsweise des rechten Wandlerelements 12.

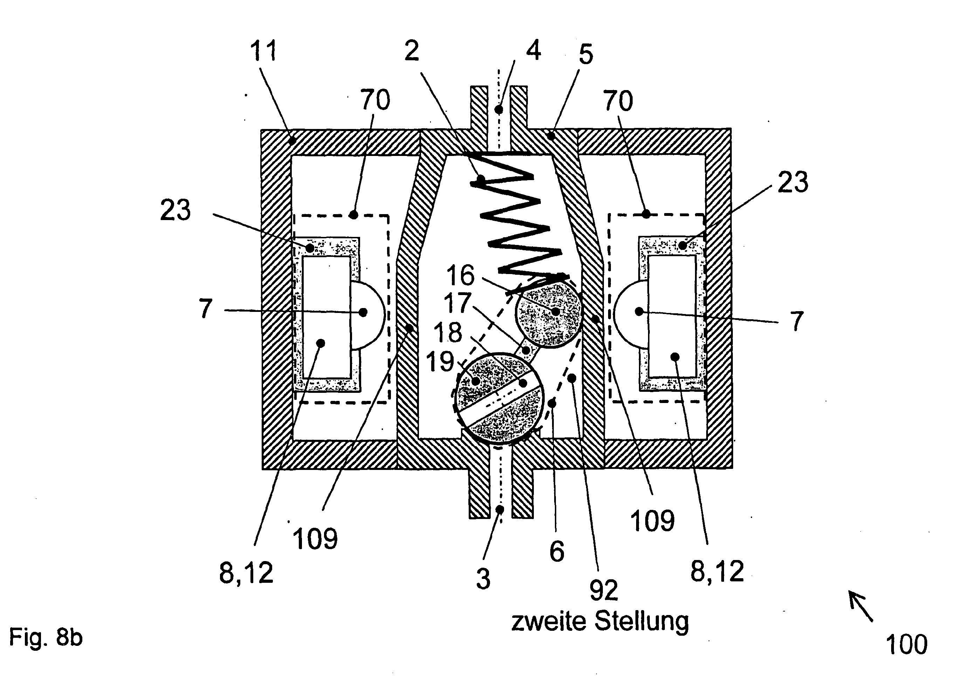

Fig. 8b zeigt einen Längsschnitt durch das Schaltventil mit dem Schaltelement 6 in einer zweiten Stellung 92 gemäß dem Ausführungsbeispiel. Durch die Drehung des Schaltelements 6 von der ersten Stellung 91 in die zweite Stellung 92 ist der Fluiddurchfluss entlang des Fluidwegs 3, 4 unterbrochen, da die Bohrung 18 bei diesem Ausführungsbeispiel nicht mehr so angeordnet ist, dass das Fluid durch sie hindurchströmen kann. Das Schaltelement 6 kann bei diesem Ausführungsbeispiel ein Impulsaufnehmer 16, ein Rotationselement 19 mit einer Bohrung 18 sowie ein starres Verbindungselement 17 zum starren Verbinden des Impulsaufnehmers 16 mit dem Rotationselement 19 umfassen. Der Impulsaufnehmer 16 kann dabei ausgebildet sein, um einen Impuls der stoßartigen Krafteinwirkung auf das Fluidgehäuse 5 aufzunehmen und den Impuls über das starre Verbindungselement 17 auf das Rotationselement 19 zu übertragen.

Das Rotationselement 19 kann ausgebildet sein, um den Impuls in eine Rotationsbewegung zu transformieren, um das Schaltelement 6 von einer (91) der zwei Stellungen 91, 92 in die andere (92) der zwei Stellungen 91, 92 zu bewegen, und das Rotationselement 19 kann ausgebildet sein, um in der ersten Stellung 91 den Fluidweg 3, 4 durch das Fluidgehäuse 5 unter Durchströmung der Bohrung 18 freizuschalten (z.B. ,,Schaltventil offen"), und um in der zweiten Stellung 92 aufgrund der Rotation der Bohrung 18 mit dem Rotationselement 19 den Fluidweg 3, 4 durch das Fluidgehäuse 5 zu sperren (z.B. "Schaltventil geschlossen"). Der Impulsaufnehmer 16 kann ausgebildet sein, um zwei Stellungen 91, 92 einzunehmen, die den zwei Stellungen 91, 92 des Schaltelements 6 zugeordnet sind. Die Dichtungstoleranz des Schaltelements 6 kann beispielsweise mittels des Rotationselements 19 realisiert sein und die Anlegetoleranz des Schaltelements 6 kann beispielsweise mittels des Impulsaufnehmers 16 realisiert sein. Damit können die beiden Fertigungstoleranzen voneinander entkoppelt werden, um die Fertigung des Schaltelements 6 zu vereinfachen.

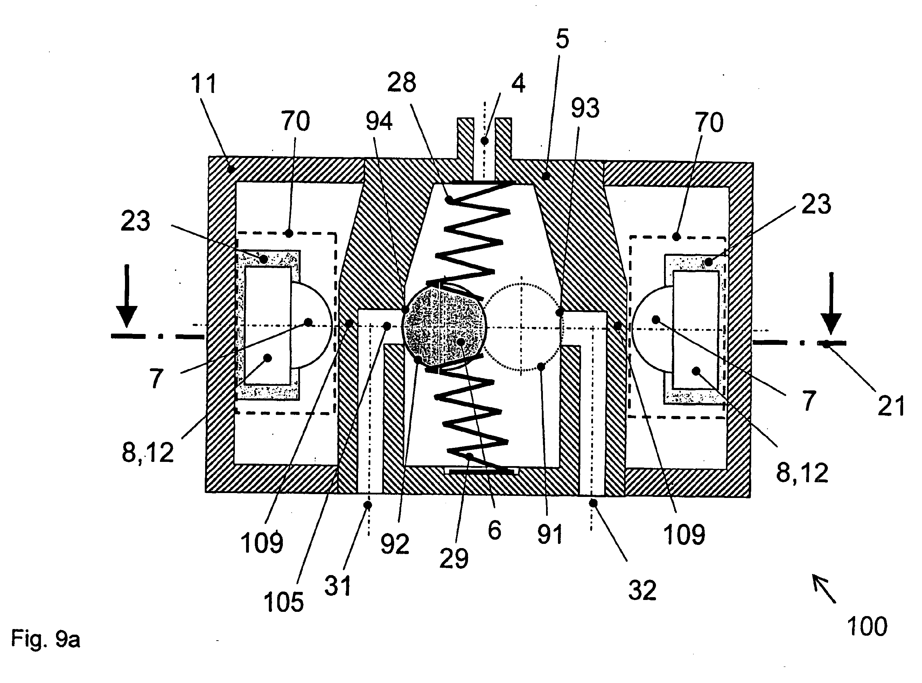

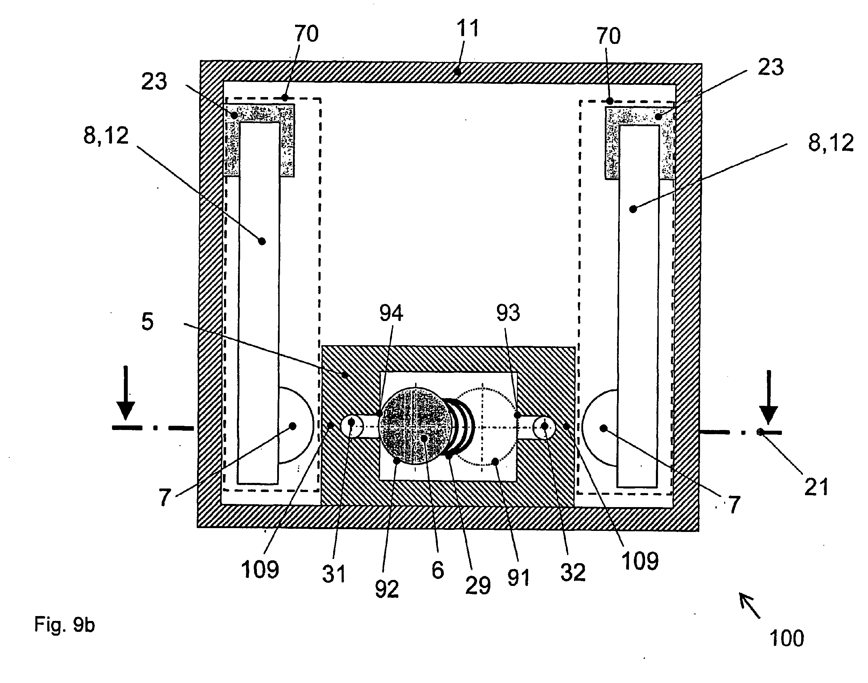

Fig. 9a zeigt einen Längsschnitt durch das Schaltventil 100 gemäß einem weiteren Ausführungsbeispiel. Fig. 9a zeigt die Seitenansicht, geschnitten an der Schnittlinie 21 gemäß Fig. 9b. Diese Anordnung folgt dem gleichen Gedanken, der auch in Fig. 8a/b umgesetzt wurde. Die Fertigungstoleranzen können beispielsweise keine gleichzeitige Anlage am Transmitter 109 und eine gleichzeitige Dichtfunktion garantieren. Deswegen kann mit zwei Federn 28, 29 das Schaltelement 6 in der ersten Stellung 91 und in der zweiten Stellung 92 positioniert werden. Das Halteelement 2 gemäß Fig. 1 kann bei diesem Ausführungsbeispiel zwei Federn aufweisen, beispielsweise eine erste Feder 28 zur Befestigung des Schaltelements 6 an einem oberen Ende innerhalb des Fluidgehäuses 5 und eine zweite Feder 29 zur Befestigung des Schaltelements 6 an einem unteren Ende innerhalb des Fluidgehäuses 5.

Die erste Feder 28 und die zweite Feder 29 sind beispielsweise innerhalb des Fluidgehäuses 5 so angeordnet, dass das Schaltelement 6 unter Aufbringung der Losbrechenergie sich von einer der zwei Stellungen 91, 92 in die andere der zwei Stellungen 91, 92 bewegen kann und bei dieser Bewegung von den zwei Federn 28, 29 des Halteelements 2 gehalten werden kann. Dabei können die zwei Federn 28, 29 so ausgebildet sein, dass sie in der ersten Stellung 91 und in der zweiten Stellung 92 je eine maximal mögliche Federauslenkung aufweisen, ohne dabei einen elastischen Bereich der Federn 28, 29 zu verlassen, um den Potentialwall auszubilden, der das Schaltelement 6 daran hindert, ohne äußere Energieeinwirkung von einer der zwei Stellungen 91, 92 zu der anderen der zwei Stellungen 91, 92 zu wechseln. Erst durch die Impulsübertragung von der Betätigungseinrichtung 70 über das Fluidgehäuse 5 auf das Schaltelement 6 kann das Schaltelement 6 eine kinetische Energie aufnehmen, die es dem Schaltelement 6 ermöglicht, unter Kontraktion der zwei Federn 28, 29 und unter Überwindung sonstiger Kräfte, beispielsweise Reibungskräfte und Strömungskräfte, von der zweiten Stellung 92 in die erste Stellung 91 oder umgekehrt zu wechseln.

Bei diesem Ausführungsbeispiel ist das Schaltelement 6 beispielsweise ausgebildet, um in der ersten Stellung 91 einen ersten Fluidweg 31, 4 durch das Fluidgehäuse 5 freizugeben und einen zweiten Fluidweg 32, 4 durch das Fluidgehäuse 5 zu sperren, wobei sich der zweite Fluidweg 32, 4 von dem ersten Fluidweg 31, 4 unterscheidet. In der zweiten Stellung 92 dagegen kann das Schaltelement 6 ausgebildet sein, um den zweiten Fluidweg 32, 4 durch das Fluidgehäuse 5 freizugeben und den ersten Fluidweg 31, 4 durch das Fluidgehäuse 5 zu sperren. Bei diesem Ausführungsbeispiel ist beispielsweise die Dichtungstoleranz und die Anlegetoleranz auf die gleiche Fläche des Schaltelements 6 zu beziehen, da an der gleichen Stelle beispielsweise der Impuls übertragen werden kann und einer der Fluidwege 31, 4 oder 32, 4 abgedichtet bzw. gesperrt werden kann.

An den Transmitterstellen 109, d. h. an den Stellen, an denen der Impuls von der Wand des Fluidgehäuses 5 auf das Schaltelement 6 übertragen werden kann, sind bei diesem Ausführungsbeispiel auch die zwei fluidischen Auslässe 31, 32 angeordnet. Die Impulsübertragung kann somit über eine beispielsweise ringförmige Fläche, an der das Schaltelement 6 am Fluidgehäuse 5 im Transmitterbereich 109 anliegt, übertragen werden. Bei den vorhergehenden Ausführungsbeispielen dagegen konnte eine Impulsübertragung im Idealfall über einen einzigen Punkt, beispielsweise als eine Hertz sche Pressung erfolgen, nämlich für den Fall, dass das kugelförmig ausgestaltete Schaltelement 6 in einem Punkt an der Wand des Fluidgehäuses 5 anlag. Bei dem Ausführungsbeispiel kann der fluidische Auslass 31, 32 beispielsweise eine runde Öffnung aufweisen, wobei der Kreismittelpunkt der Öffnung auf der Betätigungsachse 105 liegen kann, um eine möglichst zentrale Impulsweitergabe von dem Fluidgehäuse 5 auf das Schaltelement 6 zu gewährleisten.

Fig. 9a zeigt darüber hinaus auch exemplarisch, dass mit diesem Funktionsprinzip auch Mehrwegventile, d. h. Ventile mit mehr als einem fluidischen Ein- und Auslass, realisiert werden können. In Fig. 9a ist beispielsweise ein 3/2-Wege-Ventil dargestellt mit einem fluidischen Einlass 4 und zwei fluidischen Auslässen 31 und 32, welche abwechselnd geöffnet werden können. Verallgemeinert können sich durch geeignete Anordnung von eventuell mehreren Schaltelementen 6 und entsprechend positionierten Wandlerelementen 12 Schaltventile 100 mit beliebig vielen Ein- und Auslässen realisieren lassen.

Fig. 9b zeigt einen schematischen Querschnitt durch das Schaltventil 100 gemäß dem Ausführungsbeispiel. Fig. 9b stellt die Draufsicht dar, geschnitten an der Schnittlinie 21 gemäß Fig. 9a. Es sind die zwei fluidischen Auslässe 31, 32 zu erkennen sowie eine Feder 28 des Halteelements 2. Die zweite Feder 29 kann sich aufgrund der Schnittdarstellung oberhalb der Schnittebene befinden, so dass sie in dieser Schnittdarstellung nicht einsehbar ist. Die Betätigungseinrichtung 70 kann beispielsweise eine Einspannung 23 aufweisen, um das Wandlerelement 12, das Mitnehmerelement 8 und das Kontaktelement 7 an einem oberen Ende einzuspannen. Das Wandlerelement 12 kann beispielsweise als ein piezoelektrischer Biegewandler ausgeführt sein, um so aufgrund einer Längenänderung des Mitnehmerelements 8 eine stoßartige Bewegung auf das Kontaktelement 7 auszuführen, um den Stoß im Bereich des Transmitters 109 des Fluidgehäuses 5 auf das Schaltelement 6 zu übertragen.

Dieses Ausführungsbeispiel zeigt, dass die Betätigungseinrichtung 70, zwei Wandlerelemente 12, zwei Mitnehmerelemente 8 sowie zwei Kontaktelemente 7 umfassen kann. Auch ist es bei einem Ausführungsbeispiel möglich, dass beide Wandlerelemente 12 mit Energie versorgt werden, so dass beide Kontaktelemente 7 auf das Fluidgehäuse 5 im Bereich der Transmitter 109 stoßen. Der Impuls kann dann beispielsweise an beiden Transmitterstellen 109 über das Fluidgehäuse 5 übertragen werden, trifft jedoch nur an einer Transmitterstelle 109 auf das Schaltelement 6, das im Bereich der entsprechenden Transmitterstelle 109 an der Innenwand des Fluidgehäuses 5 anliegt. Die zweite Impulsübertragung findet beispielsweise kein Schaltelement 6 vor, so dass der zweite Impuls durch das Fluidgehäuse 5 wandern und von dem Fluidgehäuse 5 gedämpft werden kann. Eine gleichzeitige Betätigung der zwei Wandlerelemente 12 kann deshalb nicht als energieeffizient angesehen werden, hat aber den Vorteil, dass für die Auslösung des Schaltvorgangs keine Information notwendig ist, in welcher der zwei Stellungen 91, 92 sich das Schaltelement 6 gerade befindet.

Ein weiterer Vorteil dieser Anwendungsbeispiele, bei denen beide Wandlerelemente 12 mit Energie versorgt werden, ist, dass sich für das Schaltventil 100 stets der Zustand einstellt, für den der Schaltvorgang ausgelöst wird. Beispielsweise führt eine Ansteuerung eines Zustands "zu" bzw. "Schließe Ventil" stets zu einem geschlossenen Ventil 100 und eine Ansteuerung eines Zustands "auf" bzw. "Öffne Ventil" stets zu einem geöffneten Ventil 100.

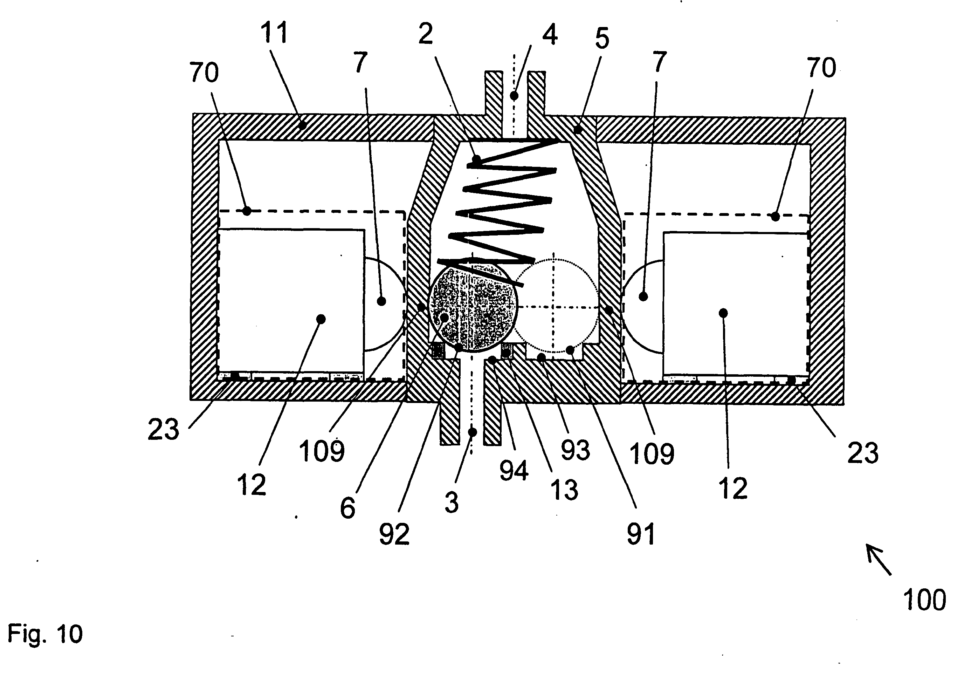

Fig. 10 zeigt einen schematischen Längsschnitt durch das Schaltventil 100 gemäß einem weiteren Ausführungsbeispiel. Bei diesem Ausführungsbeispiel kann das Fluidgehäuse 5 beispielsweise ein Dichtelement 13 aufweisen, wobei das Dichtelement 13 ausgebildet sein kann, um beispielsweise zusammen mit dem sich in der zweiten Stellung 92 befindlichen Schaltelement 6 den Durchgang des Fluids durch das Fluidgehäuse 5 abzuschalten. Mittels des Dichtelements 13 kann beispielsweise die Fertigung des Schaltelements 6 vereinfacht werden, da eine ungenaue Dichtungstoleranz durch das Dichtungselement 13 ausgeglichen werden kann. Beispielsweise kann das Dichtelement 13 als ein Ring aus Kunststoff ausgeführt sein, um ein kugelförmig ausgestaltetes Schaltelement 6 gegen das Fluidgehäuse 5 abzudichten. Zur sicheren Abdichtung des fluidischen Auslasses 3 bei gleichzeitiger Anlage des Schaltelements 6 am Transmitter 109 des Fluidgehäuses 5 kann beispielsweise die durch ein Positionselement 94 definierte zweite Stellung 92, welche die Schaltposition "Ventil geschlossen" bewirkt, mittels eines Dichtelements 13 ausgeführt sein. Das Dichtelement 13 kann auch eine Fertigung des Schaltelements 6 vereinfachen, da beispielsweise nicht mehr gleichzeitig die Einhaltung von zwei Toleranzen an zwei verschiedenen Stellen notwendig ist, sondern die Dichtungstoleranz durch das Dichtelement 13 bewirkt wird und die Anlegetoleranz durch das Schaltelement 6 bewirkt wird.

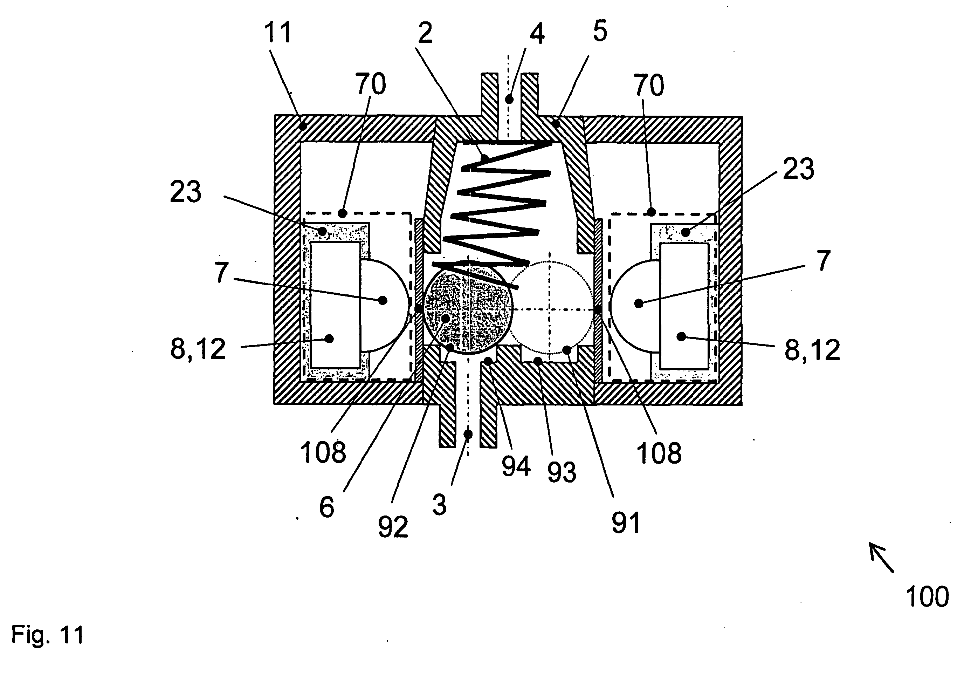

Fig. 11 zeigt einen schematischen Längsschnitt durch das Schaltventil 100 gemäß einem weiteren Ausführungsbeispiel. Die Impulsübertragung von dem Kontaktelement 7 auf das Schaltelement 6 kann beispielsweise durch einen Transmitter 108 erfolgen, wobei durch diesen Übertragungsmechanismus die Medientrennung realisiert werden kann, d. h. das im Schaltventil 100 befindliche Fluid hat keinen Kontakt zu irgendwelchen Elementen des Impuls erzeugenden Wandlerelements 12, sondern nur zu beispielsweise den Innenseiten des Fluidgehäuses 5 und zu beispielsweise dem Schaltelement 6. Fig. 11 zeigt ein Beispiel, in dem der Transmitter 108 nicht mit dem Fluidgehäuse 5 identisch ist, sondern als separates Bauteil ausgeführt sein kann, welches mit dem Fluidgehäuse 5 dicht verbunden sein kann, so dass kein Fluid austreten kann. Dadurch kann sich die Möglichkeit ergeben, den Transmitter 108 aus einem anderen Material zu wählen wie das Fluidgehäuse 5, beispielsweise aus einem elastischen Material, welches etwaige Fertigungstoleranzen leichter ausgleichen kann. Somit kann es für das Schaltelement 6 ausreichend sein, eine Dichtungstoleranz einzuhalten und im Bereich einer Anlegetoleranz weniger restriktive Forderungen einzuhalten.

Auch sind Kombinationen aus dem Ausführungsbeispiel gemäß Fig. 11 und dem Ausführungsbeispiel gemäß Fig. 10 oder auch anderen Ausführungsbeispielen möglich, so dass beispielsweise durch eine Membran im Bereich des Transmitters 108 und durch ein Dichtelement 13 im Bereich des fluidischen Auslasses 3 keine strengen Fertigungsgenauigkeiten bezüglich der Anlegetoleranz und der Dichtungstoleranz eingehalten werden brauchen. Dann könnte beispielsweise das Schaltelement 6 noch einfacher gefertigt werden, da es weder eine strenge Dichtungstoleranz noch eine strenge Anlegetoleranz einzuhalten bräuchte.

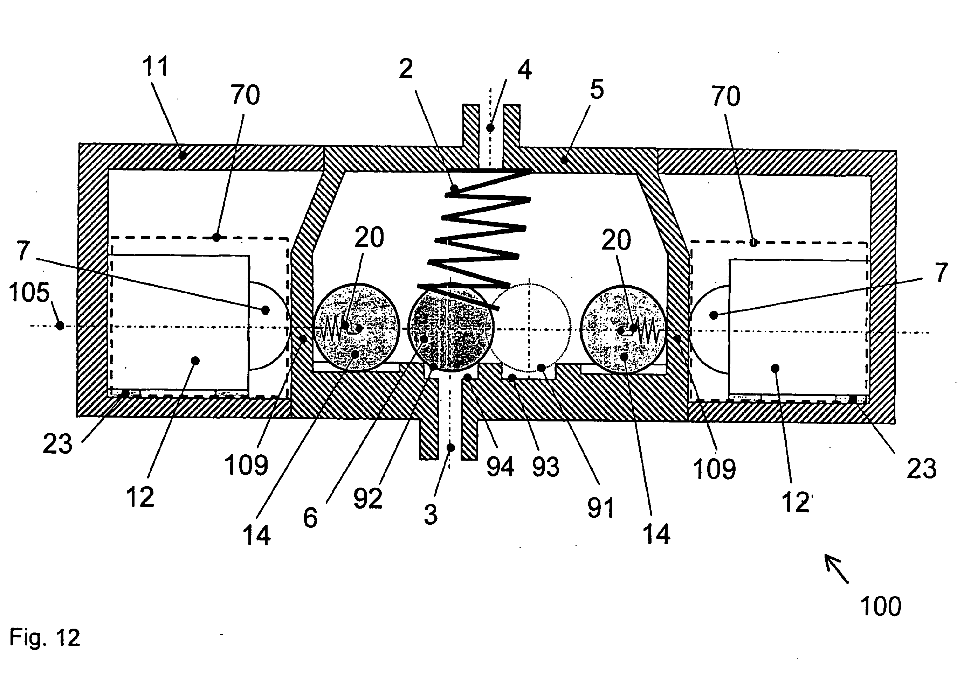

Fig. 12 zeigt einen schematischen Längsschnitt durch das Schaltventil 100 gemäß einem weiteren Ausführungsbeispiel. Die Schwierigkeit, dass bei Fertigungstoleranzen beispielsweise keine gleichzeitige Dicht- und Anlagefunktion des Schaltelements 6 gewährleistet werden kann, kann auch mit der gemäß Fig. 12 gezeigten Variante umgangen werden. Der durch das Wandlerelement 12 erzeugte Impuls kann beispielsweise durch das Kontaktelement 7 über den Transmitter 109 auf ein Zwischenelement 14 übertragen werden, das kugelförmig ausgestaltet ist, aber auch beispielsweise zylinderförmig ausgestaltet sein kann oder eine andere Form aufweisen kann. Dieses Zwischenelement 14 kann dann beispielsweise in Richtung des Schaltelements 6 beschleunigt werden, um seine kinetische Energie an das Schaltelement 6 abzugeben, wodurch der Wechsel des Schaltelements 6 von einer ersten Stellung 91 in eine zweite Stellung 92 oder umgekehrt ausgelöst werden kann. Die sichere Funktion dieses Prinzips kann beispielsweise durch eine Rückholfeder 20 erzielt werden, welches die Anlage des Zwischenelements 14 an dem Transmitter 109 in einem Ruhezustand bewirken kann. Es wäre beispielsweise auch denkbar, statt der Rückholfeder 20 einen magnetischen Rückholmechanismus für das Zwischenelement 14 einzusetzen.

Beispielsweise kann das Fluidgehäuse 5 ausgebildet sein, um unter Verwendung der zwei Zwischenelemente 14, deren Schwerpunkte sich idealerweise auf der Betätigungsachse 105 innerhalb des Fluidgehäuses 5 befinden und auf dieser Betätigungsachse 105 beweglich sind, eine Impulsübertragung von der Betätigungseinrichtung 70 über eines der zwei Zwischenelemente 14 auf das Schaltelement 6 bewirken, um das Schaltelement 6 von einer der zwei Stellungen 91, 92 in die andere der zwei Stellungen 91, 92 zu bewegen. Das Fluidgehäuse 5 kann beispielsweise ausgebildet sein, um die zwei Zwischenelemente 14 unter Verwendung einer Rückholfeder 20 in ihre Ruhestellungen zurückzuholen, wobei die zwei Zwischenelemente 14 bei Einnahme ihrer Ruhestellungen beispielsweise an zwei gegenüberliegenden Innenwänden des Fluidgehäuses 5 anliegen, um die Impulsübertragung bewirken zu können. Mit Hilfe der zwei Zwischenelemente 14 kann beispielsweise die Anlegetoleranz des Schaltelements 6 vergrößert werden, d. h. eine Fertigung des Schaltelements 6 kann dadurch vereinfacht werden, dass die Anlegestelle nicht so genau ausgeführt werden braucht, wie es beispielsweise bei dem Ausführungsbeispiel gemäß Fig. 1 notwendig wäre. Bei weiteren Ausführungsbeispielen wäre auch denkbar, nur ein Zwischenelement 14 einzusetzen oder mehrere Zwischenelemente 14.

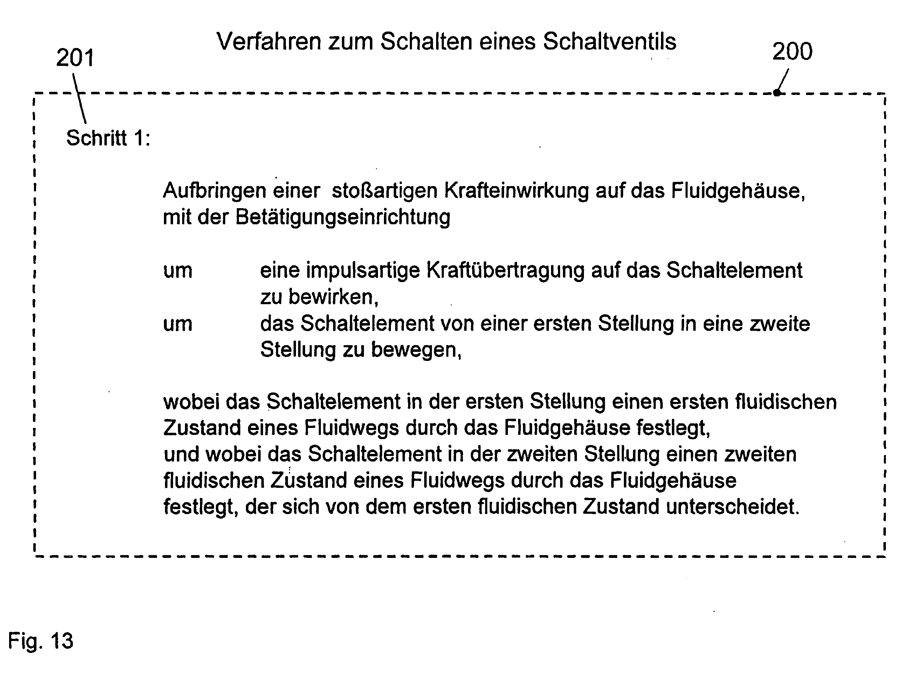

Fig. 13 zeigt eine Darstellung eines Verfahrens 200 zum Schalten eines Schaltventils 100. Das Verfahren 200 kann beispielsweise einen ersten Schritt 201 umfassen, wobei in dem ersten Schritt 201 eine stoßartige Krafteinwirkung auf das Fluidgehäuse 5 mit der Betätigungseinrichtung 70 aufgebracht wird, um eine impulsartige Kraftübertragung auf das Schaltelement 6 zu bewirken, um das Schaltelement 6 von einer ersten Stellung 91 in eine zweite Stellung 92 zu bewegen, wobei das Schaltelement 6 in der ersten Stellung 91 einen ersten fluidischen Zustand eines Fluidwegs 3, 4 durch das Fluidgehäuse 5 festlegt und wobei das Schaltelement 6 in der zweiten Stellung 92 einen zweiten fluidischen Zustand eines Fluidwegs 3, 4 durch das Fluidgehäuse 5 festlegt, der sich von dem ersten fluidischen Zustand unterscheidet.

Das Verfahren 200 kann durch den ersten Schritt 201 ausgeführt werden, wobei der erste Schritt 201 beispielsweise einen Schaltvorgang des Schaltventils 100 beschreibt. Bei einem Zurückschalten in den ursprünglichen Zustand bzw. in einen weiteren Zustand kann der erste Schritt 201 erneut ausgeführt werden. Auch kann der erste Schritt 201 zur Schaltung von Mehrwegschaltventilen einmal oder mehrmals hintereinander ausgeführt werden.

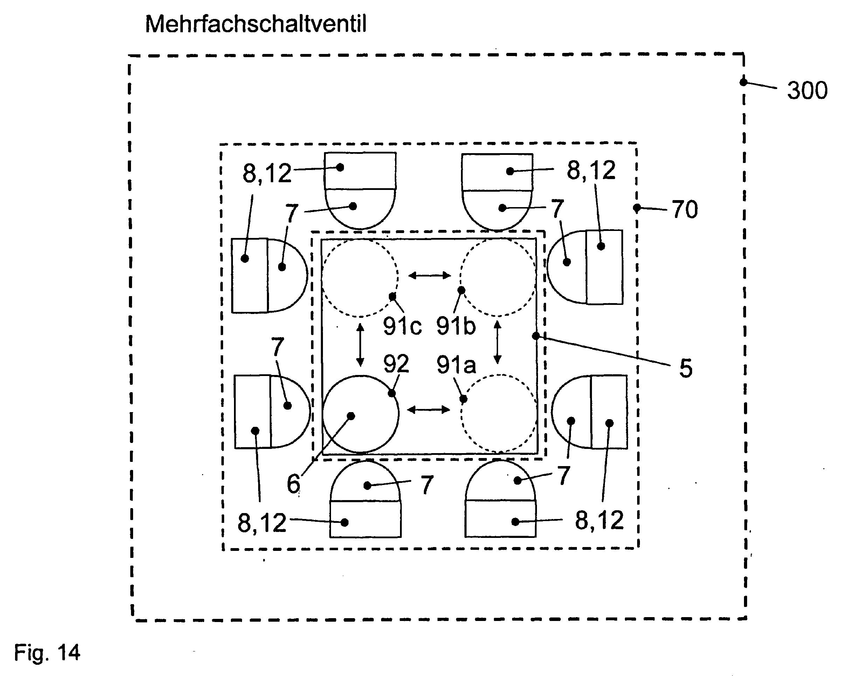

Fig. 14 zeigt eine schematische Darstellung eines Querschnitts durch ein Mehrfachschaltventil 300 gemäß einem Ausführungsbeispiel. Das Mehrfachschaltventil 300 weist bei diesem Ausführungsbeispiel vier Rastpositionen auf, in denen das Schaltelement 6 die Stellungen 92, 91a,b,c stabil einnehmen kann.

Die Betätigungseinrichtung 70, die außerhalb des Fluidgehäuses 5 angebracht ist, weist in diesem Ausführungsbeispiel acht Kombinationen mit Kontaktelementen 7, Mitnehmerelementen 8 und Wandlerelementen 12 auf. Durch geeignete Ansteuerung der Wandlerelemente 12 kann das Schaltelement 6 jede der vier Stellungen 92, 91a,b,c einnehmen. Durch gleichzeitige oder näherungsweise gleichzeitige Ansteuerung von zwei Wandlerelementen 12 ist es beispielsweise auch möglich, das Schaltelement 6 in eine gegenüberliegende Stellung zu bringen, beispielsweise von der Stellung 92 in die Stellung 91b.

Mit dem Mehrfachschaltventil 300 lässt sich beispielsweise ein Mehrwegeventil realisieren, z.B. ein Mischventil, das eine Durchmischung mehrerer Fluide gemäß einem vorbestimmten Mischverhältnis bewirken kann.

In weiteren Ausführungsbeispielen kann das Mehrfachschaltventil 300 auch mit mehr als einem Schaltelement 6 betrieben werden, beispielsweise mit zwei Schaltelementen 6 gemäß Fig. 14. Beiden Schaltelementen 6 können feste Stellungen 91, 92a,b,c zugewiesen werden, beispielsweise die Stellungen 92 und 91a für ein erstes Schaltelement 6 und die Stellungen 91b und 91c für ein zweites Schaltelement 6. Weiterhin wäre es auch möglich, die Schaltelemente 6 sich unter Einnahme jeder der Stellungen 92, 91a,b,c innerhalb des Fluidgehäuses 5 bewegen zu lassen, beispielsweise in Abhängigkeit von einer Ansteuerung der Wandlerelemente 12.

Im Folgenden werden weitere Vorteile von Ausführungsbeispielen der Erfindung aufgezeigt. Ein Schaltventil 100 kann beispielsweise als ein erstes Funktionsmerkmal bzw. als eine erste Funktionsvariante aufweisen, dass eine Umschaltung durch Stoßbetätigung realisiert wird, gemäß der Darstellung in Fig. 4a/b. Ein zweites Funktionsmerkmal können die Einrastpositionen des Schaltelements 6 sein, die durch die Positionselemente 93, 94 festgelegt sind, und ebenfalls in Fig. 4a/b dargestellt sind. Ein drittes Funktionsmerkmal kann der Potentialwall sein, der zwischen den zwei Stellungen 91, 92 existiert. Auch der Potentialwall ist in Fig. 4a/b dargestellt. Als ein viertes Funktionsmerkmal kann der Ventileinlass 4 und der Ventilauslass 3 angesehen werden, die ebenfalls in Fig. 4a/b dargestellt sind.

Während durch die vier beschriebenen Funktionsmerkmale ein Grundprinzip des Schaltventils 100 beschrieben werden kann, so ist ein weiterer Teilaspekt der Aspekt der Impulserzeugung durch das Schaltventil 100. Der Impuls kann beispielsweise durch einen Piezobiegewandler erzeugt werden, gemäß Darstellung in den Fig. 4a/b, 8a/b, 9a/b und 11. Die Impulserzeugung kann durch einen Piezostack ausgeführt sein, gemäß Darstellung in den Fig. 5a/b, 10 und 11. Die Impulserzeugung kann durch einen Piezostack mit Umlenkmechanismus, welcher durch ein Festkörpergelenk 15 fixiert ist, bewirkt werden, gemäß Darstellung in der Fig. 6. Die Impulserzeugung kann durch eine Vorspannung des Mitnehmerelements 8 gegen einen Energiespeicher 1 und Impulsübertrag beim Zurückschwingen bewirkt werden, gemäß Darstellung in der Fig. 7. Die Impulserzeugung kann durch einen elektromagnetischen Antrieb, beispielsweise gemäß Fig. 7, erzeugt werden oder durch einen hydraulischen Antrieb, einen elektrostatischen Antrieb, einen pneumatischen Antrieb oder durch eine manuelle Betätigungseinrichtung 70 mit mechanischer Übersetzung.

Ein weiterer Teilaspekt des Schaltventils 100 ist beispielsweise die Realisierung der Schaltpositionen durch die Positionselemente 93, 94 bzw. der Stellungen 91, 92. Beispielsweise kann das Halteelement 2 das Schaltelement 6 in das Positionselement 93, 94 drücken, welches die erste Stellung 91 bzw. die zweite Stellung 92 ausbildet. Dies ist beispielsweise dargestellt in den Fig. 4a/b, 5a/b, 6, 7, 10, 11 und 12. Weiterhin kann der Impulsaufnehmer 16 ein starr verbundenes Schaltelement 6 verdrehen, was in Fig. 8a/b dargestellt ist. Weiterhin können die Schaltpositionen 91, 92 durch zwei gegenüberliegende Halteelemente 2 realisiert sein, was beispielhaft in Fig. 9a/b dargestellt ist.

Ein weiterer Teilaspekt des Schaltventils 100 kann die Impulsübertragung sein, die beispielsweise auf eine starre Wand erfolgen kann, d. h. der Transmitter 109 kann ein Teil des Fluidgehäuses 5 sein. Dies ist beispielsweise dargestellt in den Fig. 4a/b, 5a/b, 6, 7, 8a/b, 9a/b und 10. Die Impulsübertragung kann auf eine flexible Membran erfolgen, was beispielsweise in Fig. 11 dargestellt ist. Die Impulsübertragung kann auch auf eine starre Wand mit angefedertem Zwischenkörper 14 erfolgen, was beispielhaft in Fig. 12 dargestellt ist. Ein weiterer Teilaspekt des Schaltventils 100 kann die Funktionsweise der Abdichtung sein. Diese kann beispielsweise mit einem elastischen Einlegeelement bzw. einem Dichtelement 13 erfolgen, was beispielsweise in Fig. 10 dargestellt ist.

Weitere Vorteile von Schaltventilen 100 in Anwendungen von erfindungsgemäßen Ausführungsbeispielen können der folgenden Beschreibung entnommen werden.

Schaltventile 100 werden in vielen Anwendungen benötigt, wo es darauf ankommt, einen von zwei fluidischen Zuständen 91, 92, im Folgenden Schaltzustände bzw. Stellungen bzw. Positionen genannt, z. B. zwei Schaltzustände 91, 92 mit unterschiedlichen fluidischen Widerständen, anzusteuern und diesen Zustand dann ohne weiteren Energieverbrauch beizubehalten. Das betrifft beispielsweise die Automatisierungstechnik einschließlich der Pneumatik genauso wie die Prozesstechnik, die Automobiltechnik oder die Medizintechnik. Sind giftige, aggressive oder empfindliche Fluide, beispielsweise Chemikalien, Kraftstoffe oder Körperflüssigkeiten zu steuern, dann ist auf eine gute Dichtfunktion im Schaltventil bzw. Ventil 100 zu achten. Weiter kann aus Gründen der Sicherheit oder Verträglichkeit eine Medientrennung erforderlich sein. Berührung mit dem Fluid kann unter anderem bei wichtigen Komponenten des Antriebs, wie elektronischen Baugruppen, Widerständen, Spulen oder Biegewandlern, zu Problemen führen.

Im günstigsten Fall wird das Ventil 100 so ausgeführt, dass sich in dem Bereich des Ventils 100, der mit Fluid gefüllt ist oder der vom Fluid berührt wird, nur Elemente des Ventils 100 befinden, die mit dem Fluid verträglich sind. Das sind bei dem hier betrachteten Ventil 100 neben einem Fluidgehäuse bzw. fluidischen Gehäuse 5 mindestens ein steuerbares Schaltelement bzw. fluidisches Schaltelement 6, mindestens zwei Positionselemente 93, 94 und mindestens ein Halteelement 2. Dabei stellt das fluidische Gehäuse 5 im Wesentlichen denjenigen Teil des Ventils 100 dar, der mit dem Fluid in Berührung kommt, in dem das Fluid geführt wird und wo die unterschiedlichen fluidischen Widerstände entsprechend den Schaltzuständen 91, 92 realisiert werden.

Das fluidische Schaltelement 6 bewirkt durch seine geometrische Position in dem fluidischen Gehäuse 5 die Ausprägung der beiden Schaltzustände 91, 92. Die Positionselemente 93, 94 dienen mindestens je zur räumlichen Positionierung des fluidischen Schaltelements 6 in jeweils einem der beiden Schaltzustände 91, 92. Sie sind so beschaffen, dass sich in jedem der Schaltzustände 91, 92 ein unterschiedlicher fluidischer Zustand, beispielsweise ein unterschiedlicher Durchfluss mit unterschiedlichem fluidischen Widerstand, ergibt. Die Positionselemente 93, 94 bestehen mindestens aus einem Sitz, in dem sich das fluidische Schaltelement 6 in einem Schaltzustand 91, 92 mindestens unter Mitwirkung durch das Halteelement 2 so positioniert, dass der gewünschte fluidische Widerstand entsteht. Das Halteelement 2 hat unter anderem die Aufgabe, dafür zu sorgen, dass eine ausreichende Kraft auf das fluidische Schaltelement 6 wirkt, wenn das fluidische Schaltelement 6 in einem Positionselement 93, 94 positioniert ist, und dass die potentielle Energie des fluidischen Schaltelements 6 in jeder der durch die Positionselemente 93, 94 vorgegebenen Positionen 91, 92 ein Minimum hat und die potentielle Energie des fluidischen Schaltelements 6 an jedem anderen Ort mindestens größer ist als die minimale potentielle Energie in einer der durch die Positionselemente 93, 94 definierten Positionen 91, 92. Allgemein ausgedrückt sind das fluidische Schaltelement 6, das Halteelement 2 und die Positionselemente 93, 94 so geschaffen, dass das fluidische Schaltelement 6 sich außer während der Schaltvorgänge in der Regel in einer der Positionen 91, 92 befindet.

Für den Schaltvorgang des Ventils 100 von einem Schaltzustand 91 in den anderen 92 kann dem fluidischen Schaltelement 6 in geeigneter Weise mindestens so viel Energie zugeführt bzw. eine solche Kraft ausgeübt werden, damit es den Potentialwall sowie andere Kräfte, die das fluidische Schaltelement 6 am Verlassen der Position 91, 92 hindern, wie Reibungskräfte oder durch das Fluid erzeugte Kräfte, überwinden kann. Die Kraft zur Überwindung der besagten anderen Kräfte wird im Folgenden Losbrechkraft genannt.

Für eine gute Dichtfunktion ist das fluidische Schaltelement 6 erfindungsgemäß als Kugel ausgeführt und die beiden Positionselemente 93, 94 als Vertiefungen. Das Halteelement 2 kann dann beispielsweise aus einer Feder bestehen. Weiter sind auch geeignete Schieber, Klappen, Kolben oder Deckel je nach Anforderungen als fluidisches Schaltelement 6 vorstellbar. Das fluidische Gehäuse 5 hat außer den erforderlichen fluidischen Ein- 4 und Auslässen 3 höchstens solche weiteren Durchdringungen, die vom Fluid dauerhaft nicht passiert werden können und durch die jedoch die Antriebsenergie eingebracht werden kann. Dazu kann das Ventilgehäuse 11 z. B. aus nur einem einzigen Werkstoff oder aus verschiedenen Werkstoffen gefertigt werden, wobei mehrere Gehäuseteile beispielsweise stoffschlüssig oder kraftschlüssig dicht miteinander verbunden werden. Bei dieser Art der Medientrennung stellt die Einbringung der für die Schaltvorgänge notwendigen Energie häufig ein technisches Problem dar, für das es verschiedene Lösungen geben kann, die hier beispielhaft veranschaulicht werden.

So kann als erstes Beispiel genannt werden, dass die Energiezufuhr durch ein Magnetfeld erfolgen kann, wobei die Feldlinien ein fluidisch nicht durchdringbares Gehäuse aus geeigneten nicht magnetischen Werkstoffen ohne wesentliche Beeinträchtigung passieren können.

Eine weitere Möglichkeit der Energieübertragung besteht darin, die Trägheit der Masse des fluidischen Schaltelements 6 des Ventils 100 auszunutzen, um das fluidische Schaltelement 6 von einem Schaltzustand 91 in den anderen 92 zu überführen. Ein solcher Energieübertrag ist von Beschleunigungssensoren bekannt, wie sie beispielsweise im Auto für das Auslösen des Airbags verwendet werden. Da hier mindestens das ganze fluidische Gehäuse 5 beschleunigt werden kann, ergibt sich neben der unvorteilhaften Bewegung des fluidischen Gehäuses 5 eine schlechtere Energiebilanz.

Ein weiteres Beispiel stellt ein mechanischer Antrieb dar, bei dem die Energie auf das fluidische Schaltelement 6 des Ventils 100 durch eine vergleichsweise langsam veränderliche Kraft, die praktisch für die gesamte Dauer des Schaltvorgangs über eine bestimmte Wegstrecke wirkt, eingebracht wird, wie es z. B. über einen dichten Faltenbalg realisiert werden kann.

Eine weitere Möglichkeit des mechanischen Antriebs besteht darin, dass die Energie auf das Schaltelement bzw. fluidische Element 6 in einem vergleichsweise kurzen Zeitraum, der kürzer ist als die Zeit, die der Schaltvorgang des fluidischen Schaltelements 6 aus dem einen 91 in den anderen Schaltzustand 92 benötigt, übertragen wird. Dies kann mit einer Art Stoßvorgang durch mindestens einen geeigneten Transmitter 108, 109 erfolgen, der die Aufgabe hat, die notwendige Energie mechanisch von einer Quelle außerhalb des fluidischen Gehäuses 5 auf das fluidische Schaltelement 6 im Inneren des fluidischen Gehäuses 5 zu übertragen. Der Transmitter 108 kann z. B. eine Membran sein, die Teil des fluidischen Gehäuses 5 ist oder ein anderer elastisch verformbarer Bereich des fluidischen Gehäuses 5. Der Zeitraum der Deformation des Transmitters 108 zwecks Energieübertragung durch den Stoßvorgang ist kürzer als diejenige Zeit, die während des Schaltvorgangs des fluidischen Schaltelements 6, d. h. der Bewegung aus der einen 91 in die andere Position 92, vergeht. Beim Stoßvorgang erhält das fluidische Schaltelement 6 so viel kinetische Energie, dass es die Losbrechkraft aufbringen und den Potentialwall überwinden kann.

Durch die Art des Impulsübertrags ist die auf das Schaltelement 6 wirkende Kraft genau dann am größten, wenn sie benötigt wird, nämlich ganz zu Beginn der Bewegung, wenn die Losbrechkraft aufgebracht wird, damit sich überhaupt etwas bewegt. Wenn diese Losbrechkraft überwunden ist, beispielsweise die Haftreibung etc., braucht nicht mehr so viel Energie zugeführt werden, um die Bewegung in die andere Rastposition aufrecht zu erhalten. Der zeitliche Verlauf der gerade benötigten Kraft zum Bewegen des Schaltelements 6 von einer Position in die andere 91, 92 kann z.B. als ideale Kraftkennlinie des Schaltelements 6 bezeichnet werden. Die mit dem impulsartigen Antrieb bzw. dem Betätigungselement 70 erzeugbare Kraftkennlinie kommt nun dieser idealen Kraftkennlinie sehr nahe, was Vorteile bzgl. Energieeffizienz bringt.

Zur Veranschaulichung seien der zentrale Stoß von zwei Billardkugeln mit gleichen Massen angeführt, wo die stoßende Kugel nach dem Stoß ruht und ihren Impuls und die kinetische Energie vollständig auf die gestoßene Kugel übertragen hat, die sich nach dem Stoß entsprechend bewegt.

Die Wirkung des Transmitters 108, 109 kann sehr gut mit dem physikalischen Pendelversuch veranschaulicht werden, wo beispielsweise fünf gleiche elastische Kugeln, z. B. K1 - K5, in einer horizontalen Linie mittels senkrechter Fäden aufgehängt sind. Wird eine der äußeren Kugeln, z. B. K1, ausgelenkt und trifft beim Zurückpendeln auf die nun äußerste der in Ruhe befindlichen Kugeln, z. B. K2, so gibt sie ihre Energie auf die andere zuerst äußere Kugel, d. h. K5, ab, wobei die Kugeln K2, K3 und K4 praktisch in Ruhe bleiben. Dabei haben die Kugeln K2, K3 und K4 praktisch keine Bewegung vollführt, sondern nur die zum Übertragen der Energie notwendigen Deformationen erfahren. Diese letzt dargestellte Möglichkeit wird im Folgenden als Stoßbetätigung bezeichnet. Dabei wird die mechanische Energie, die für die Stoßbetätigung benötigt wird, durch ein Wandlerelement 12 erzeugt.

Bei einer Reihe von Ventilen ist der Energieverbrauch kritisch und muss minimiert werden. Man denke beispielsweise an telemetrisch gesteuerte Ventile an schwer zugänglichen Stellen in Maschinen. Daher ist es erstens wichtig, darauf zu achten, dass das Ventil 100 nur beim Schaltvorgang von einem Schaltzustand 91 in den anderen Schaltzustand 92 Energie aufnimmt und zwischen den Schaltvorgängen überhaupt keine Energie verbraucht. Die Definition des Schaltzustands 91, 92 erfolgt durch das fluidische Schaltelement 6 unter Mitwirkung mindestens eines Halteelements 2 und beispielsweise der Positionselemente 93, 94. Das fluidische Schaltelement 6 kann im Schaltvorgang von einer ersten Position 91 in eine zweite Position 92 bewegt werden, wobei der fluidische Zustand, beispielsweise der fluidische Widerstand des Fluids durch das Ventil 100 in einer der Positionen 91 unterschiedlich ist zum fluidischen Zustand in der anderen Position 92. Die Erhaltung des Schaltzustands 91, 92 kann durch das Halteelement 2 bewirkt werden, wobei die potentielle Energie des fluidischen Schaltelements 6 für jeden der beiden Schaltzustände 91, 92 ein Minimum annehmen kann und sich zwischen den Positionen 91, 92 des fluidischen Schaltelements 6 ein Potentialwall befinden kann.

Neben der Verrastung des fluidischen Schaltelements 6, einer Kugel, mittels des Halteelements 2, das eine Feder sein kann, wie bei dem gewählten Ausführungsbeispiel dargestellt ist, kann auch eine magnetische Verrastung ausgeführt werden, wobei beispielsweise mindestens ein Permanentmagnet eingesetzt wird. Durch die Ausprägung des fluidischen Schaltelements 6, des Halteelements 2 und der Positionselemente 93, 94 können insbesondere das Verharrungsvermögen in den beiden Positionen 91, 92, z. B. bei Erschütterungen, der Energieverbrauch und die fluidischen Eigenschaften beeinflusst werden.

Insbesondere bei Ventilen 100, die eine Flüssigkeit steuern, ist zu beachten, dass die Bewegung des fluidischen Schaltelements 6 durch die Viskosität der Flüssigkeit gedämpft werden kann, was den Energieverbrauch pro Schaltvorgang beeinflussen kann. Die Dämpfung kann auch vorteilhaft genutzt werden, um das dynamische Verhalten des fluidischen Schaltelements 6 zu verbessern, z. B. um den Einfluss von Einschwingvorgängen zu minimieren, wodurch ein sicheres Einnehmen der durch die Positionselemente 93, 94 vorgegebenen Positionen 91, 92 erreicht wird. Darüber hinaus ist zu beachten, dass das fluidische Schaltelement 6 durch Reibungs- und Haftungskräfte sowie durch Kräfte, die das Fluid ausübt, daran gehindert wird, die jeweilige Position 91, 92 zu verlassen. Daher ist beispielsweise für den Schaltvorgang des fluidischen Schaltelements 6 neben der Energie zur Überwindung des Potentialwalls mindestens eine entsprechenden Losbrechkraft bezüglich der Positionselemente 93, 94 aufzubringen. Für den Antrieb des fluidischen Schaltelements 6 bedeutet das, dass neben der Kraft für die Überwindung des Potentialwalls bereits zu Beginn des Bewegungsvorgangs des fluidischen Schaltelements. 6 die Losbrechkraft aufzubringen ist.

Ausführungsbeispiele der vorliegenden Erfindung umfassen verschiedene Ausführungen von Ventilen 100 mit einem Antrieb mit Stoßbetätigung und Medientrennung im oben beschriebenen Sinne. Das bedeutet, dass sich die eigentlichen Wandlerelemente 12 des Ventils 100, die die Bewegungsenergie bzw. die für den Schaltvorgang notwendigen Kräfte durch Wandlung aus einer elektrischen oder pneumatischen Energiequelle erzeugen, außerhalb des fluidischen Gehäuses 5 des Ventils 100 befinden.

Als Wandlerelemente 12 können unter anderem elektromagnetische Antriebe, piezoelektrische Biegewandler, piezoelektrische Stapelwandler oder pneumatische Antriebe eingesetzt werden. Auf die Wandlerelemente 12 sowie die elektronischen Schaltungen zur Bereitstellung der für den Antrieb benötigen elektrischen Spannungen oder Ströme wird hier nicht weiter eingegangen, da diese nach dem Stand der Technik grundsätzlich bekannt sind.

Ein Ausführungsbeispiel des Schaltventils 100 mit Stoßbetätigung ist in Fig. 2a/b dargestellt. Im fluidischen Gehäuse 5, das mit dem Ventilgehäuse 11 verbunden ist, befindet sich ein fluidisches Schaltelement 6 in Form einer Kugel sowie ein erstes Positionselement 93 in der ersten Stellung 91 als Tasche und ein zweites Positionselement 94 in der zweiten Stellung 92 als Dichtsitz ausgeführt. Das Halteelement 2 wird durch eine Feder gebildet. Die beiden Transmitter 108 werden durch je eine Membran als Teil des fluidischen Gehäuses 5 gebildet. Weitere Elemente des fluidischen Gehäuses 5 sind der fluidische Einlass 4 und der fluidische Auslass 3. Zum Ausüben des Schaltvorgangs des fluidischen Schaltelements 6 befinden sich im Ventilgehäuse 11 ein Mitnehmerelement bzw. Mitnehmer 8, ein Wandlerelement 12 und zwei Kontaktelemente 7. Weiterhin sind zwei Energiespeicher 1, die bei dem Ausführungsbeispiel als Federn ausgeführt sind, dargestellt. Es ist vorstellbar, dass der Mitnehmer 8 und das Wandlerelement 12 eine Einheit bilden. Die Energiespeicher 1 sind nicht zwingend für die Funktion des Ventils 100 erforderlich. Es ist vorstellbar, dass die Energiespeicher 1 entweder mit dem Wandlerelement 12 oder dem Mitnehmer 8 eine Einheit bilden. Der Mitnehmer 8 kann in diesem Beispiel eine Drehbewegung vollführen. Die Kontaktelemente 7 sind mit dem Mitnehmer 8 verbunden und stellen zusammen mit dem Mitnehmer 8 eine Masse dar.

Es ist vorstellbar, dass die Kontaktelemente 7 mit dem Mitnehmer 8 eine Einheit bilden. Der Mitnehmer 8 kann sich über einen bestimmten Winkelbereich bewegen, ohne dass es zu einem Kontakt zwischen den Kontaktelementen 7 und den Transmittern 108 kommt. Das Wandlerelement 12 kann aus einer elektrischen oder pneumatischen Energiequelle Energie aufnehmen und eine Kraft in mindestens einer der Richtungen der Drehbewegung des Mitnehmers 8 erzeugen. Der Mitnehmer 8 ist mit dem Wandlerelement 12 so gekoppelt, dass die Kraft des Wandlerelements 12 zu einer Drehbewegung des Mitnehmers 8 und der Kontaktelemente 7 in der entsprechenden Drehrichtung führt.

Im Ruhezustand, d. h. zwischen zwei Schaltvorgängen, befindet sich der Mitnehmer 8 in einer Winkelstellung zwischen den beiden jeweils größtmöglichen Drehwinkeln einer Drehrichtung, die in diesem Beispiel durch die Transmitter 108 gegeben sein können.

Für den Schaltvorgang des Ventils 100 wird das Wandlerelement 12 mit Energie versorgt und treibt mindestens den Mitnehmer 8 zusammen mit den Kontaktelementen 7 an, wobei eine Drehbewegung entsteht, die so gestaltet ist, dass in einer ersten Phase der Drehbewegung mindestens der Mitnehmer 8 und die Kontaktelemente 7 kinetische Energie aufnehmen und dass in einer weiteren Phase der Drehbewegung diese kinetische Energie in einem Stoßvorgang durch eines der beiden Kontaktelemente 7 zumindest teilweise auf einen der Transmitter 108 und das fluidische Schaltelement 6 übertragen werden. Das fluidische Schaltelement 6 bewegt sich daraufhin von einer ersten 91 der durch das Positionselement 93 definierten Stellung in die andere 92 der durch das Positionselement 94 definierten Stellung oder verharrt dabei in der besagten ersten Stellung 91.

Der Schaltvorgang kann in verschiedenen Ausprägungen ablaufen. Zuerst kann beispielsweise die Bewegung so verlaufen, dass das Kontaktelement 7 von Anfang der Bewegung an unmittelbar bis zum Stoß in Richtung auf den besagten Transmitter 108 bewegt wird. Eine weitere Möglichkeit besteht darin, die Bewegung so zu gestalten, dass das Kontaktelement 7 zunächst in entgegengesetzter Richtung, d. h. von dem zu kontaktierenden Transmitter 108 weg, bewegt wird, worauf auch mindestens einer der Energiespeicher 1 Energie aufnimmt, und die Bewegungsrichtung bei einem bestimmten Drehwinkel des Mitnehmers 8 umgekehrt wird und das Kontaktelement 7 sich nach der Umkehr auf den besagten Transmitter 108 zu bewegt.

In jedem Fall besteht durch den Stoßvorgang bei der Energieübertragung auf das fluidische Schaltelement 6 die Möglichkeit, eine mindestens ausreichend große Kraft auf das fluidische Schaltelement 6 zu erzeugen, dass die Losbrechkraft aufgebracht werden kann. Für den Stoßvorgang ist es vorteilhaft, wenn sich das fluidische Schaltelement 6 vor dem Stoß in Kontakt mit dem zu kontaktierenden Transmitter 108 befindet oder sich der zu kontaktierende Transmitter 108 unter geringem Energieverbrauch beim Stoßvorgang verformen lässt, bis er in Kontakt mit dem fluidischen Schaltelement 6 kommt.

Der Energieübertrag ist am effizientesten, wenn der Stoß zentral erfolgt und die effektive Masse der bewegten Teile, d. h. im Wesentlichen des Mitnehmers 8 und der Kontaktelemente 7, etwa gleich groß wie die Masse des zu bewegenden fluidischen Schaltelements 6 ist.

In den Fig. 3a/b ist ein weiteres Ausführungsbeispiel dargestellt, was sich im Wesentlichen von dem Ausführungsbeispiel in Fig. 2a/b dadurch unterscheidet, dass eine Antriebseinheit mit zwei Wandlerelementen 12 und zwei Mitnehmern 8 verwendet wird.

Ein weiteres Ausführungsbeispiel des erfindungsgemäßen Schaltventils 100 bezieht sich auf ein Schaltventil 100 mit Stoßbetätigung und Medientrennung, das zwei verschiedene Schaltzustände 91, 92 einnehmen kann.

Das dem weiteren Ausführungsbeispiel entsprechende Schaltventil 100 besteht mindestens aus einem Ventilgehäuse 11 aus geeigneten Werkstoffen, z. B. Kunststoff, Metall, Glas oder Keramik.

Das dem weiteren Ausführungsbeispiel entsprechende Schaltventil 100 besteht mindestens aus einem fluidischen Gehäuse 5 als Teil des Ventils 100, das aus mindestens zwei Teilen aus geeigneten Werkstoffen, z. B. Kunststoff, Metall, Glas oder Keramik, besteht, wobei die Teile des fluidischen Gehäuses 5 aus nur einem einzigen Werkstoff oder aus verschiedenen Werkstoffen bestehen und verschiedene Teile fluidisch dicht miteinander verbunden sind, und wobei mindestens ein Teil des fluidischen Gehäuses 5 einen fluidischen Einlass 4 und ein weiterer Teil des fluidischen Gehäuses 5 einen fluidischen Auslass 3 bilden, und wobei mindestens ein Transmitter 108 als Teil des fluidischen Gehäuses 5 oder als elastisch verformbarer Bereich mindestens eines Teils des fluidischen Gehäuses 5 ausgebildet ist, und wobei das fluidische Gehäuse 5 im mit Fluid gefüllten Bereich mindestens zwei Positionselemente 93, 94 gemäß den Stellungen 91 und 92 für ein fluidisches Schaltelement 6 beinhaltet.

Das dem weiteren Ausführungsbeispiel entsprechende Schaltventil 100 besteht mindestens aus einem im mit Fluid gefüllten Bereich des fluidischen Gehäuses 5 befindlichen Halteelement 2 zum Halten eines fluidischen Schaltelements 6.

Das dem weiteren Ausführungsbeispiel entsprechende Schaltventil 100 besteht mindestens aus einem im mit Fluid gefüllten Bereich des fluidischen Gehäuses 5 befindlichen fluidischen Schaltelement 6, aus einem geeigneten Werkstoff, z. B. Polymerwerkstoff, Metall, Mineral oder Keramik, wobei das fluidische Schaltelement 6, das Halteelement 2 und die Positionselemente 93, 94 für die fluidischen Widerstände des Ventils 100 in den beiden Schaltzuständen 91, 92 maßgeblich sind und wobei sich das fluidische Schaltelement 6 im Zeitraum des Schaltvorgangs des Ventils 100 in einer anderen Stellung als einer der durch die Positionselemente 93, 94 definierten Stellungen 91, 92 befindet, und wobei sich das fluidische Schaltelement 6 außerhalb des Zeitraums des Schaltvorgangs des Ventils 100 in genau einer der durch die Positionselemente 93, 94 definierten Stellungen 91, 92 befindet, und wobei die potentielle Energie des fluidischen Schaltelements 6 für jede der durch die Positionselemente 93, 94 definierten Stellungen 91, 92 ein Minimum annimmt und die potentielle Energie des fluidischen Schaltelements 6 in jeder anderen Stellung als derjenigen 91, 92, die durch die Positionselemente 93, 94 definiert sind, mindestens größer ist als die minimale potentielle Energie in einer der Stellungen 91, 92.

Das dem weiteren Ausführungsbeispiel entsprechende Schaltventil 100 besteht mindestens aus einer außerhalb des mit Fluid gefüllten Bereichs des fluidischen Gehäuses 5 befindlichen ansteuerbaren Antriebseinheit bestehend aus mindestens einem Wandlerelement 12, mindestens einem beweglichen Mitnehmer 8 und mindestens einem Kontaktelement 7, und wahlweise entweder mindestens einem Energiespeicher 1 oder keinem Energiespeicher 1, wobei das Wandlerelement 12 und der Mitnehmer 8 gekoppelt sind, und wobei entweder das Wandlerelement 12 und das Mitnehmerelement 8 eine Einheit bilden oder wobei das Wandlerelement 12 und das Mitnehmerelement 8 nicht eine Einheit bilden, und wobei entweder der Energiespeicher 1 und das Wandlerelement 12 eine Einheit bilden oder wobei der Energiespeicher 1 und das Wandlerelement 12 nicht eine Einheit bilden, und wobei der Energiespeicher 1 und das Mitnehmerelement 8 eine Einheit bilden oder wobei der Energiespeicher 1 und das Mitnehmerelement 8 nicht eine Einheit bilden, und wobei mindestens eines der Kontaktelemente 7 mit dem Mitnehmerelement 8 geeignet gekoppelt ist, und wobei jedes der Kontaktelemente 7 für sich genommen entweder mit einem der Mitnehmer 8 eine Einheit bildet oder mit keinem der Mitnehmer 8 eine Einheit bildet, und wobei zumindest der Mitnehmer 8 und die Kontaktelemente 7 eine Masse darstellen, und wobei sich der Mitnehmer 8 in mindestens zwei Richtungen längs einer Achse oder in mindestens zwei Richtungen in einer Drehbewegung bewegen kann, und wobei die Versorgung des Wandlerelements 12 mit Energie dazu führt, dass das Wandlerelement 12 mindestens den Mitnehmer 8 zusammen mit mindestens einem der Kontaktelemente 7 antreibt, wobei eine Bewegung entsteht, die so gestaltet ist, dass in einer ersten Phase der Bewegung mindestens der Mitnehmer 8 und mindestens eines der Kontaktelemente 7 kinetische Energie aufnehmen und dass in einer weiteren Phase der Bewegung die kinetische Energie in einem Stoßvorgang durch mindestens eines der Kontaktelemente 7 zumindest teilweise auf einen der Transmitter 108, 109 und das fluidische Schaltelement 6 übertragen werden, wobei sich das fluidische Schaltelement 6 von einer ersten 91 der durch die Positionselemente 93, 94 definierten Stellung in eine andere 92 der durch die Positionselemente 93, 94 definierten Stellung bewegt oder wobei das fluidische Schaltelement 6 in der besagten ersten Stellung 91 verharrt.

## Patentansprüche

1. Schaltventil (100) mit
einem Fluidgehäuse (5);
mindestens einem Schaltelement (6) innerhalb des Fluidgehäuses (5),
einer Betätigungseinrichtung (70) außerhalb des Fluidgehäuses (5),
wobei die Betätigungseinrichtung (70) ausgebildet ist, um mittels einer stoßartigen Krafteinwirkung auf das Fluidgehäuse (5) eine impulsartige Kraftübertragung auf das Schaltelement (6) zu bewirken, um das Schaltelement (6) von einer ersten Stellung (91) in eine zweite Stellung (92) zu bewegen, wobei das Schaltelement (6) in der ersten Stellung (91) einen ersten fluidischen Zustand eines Fluidwegs (3, 4) durch das Fluidgehäuse (5) festlegt und wobei das Schaltelement (6) in der zweiten Stellung (92) einen zweiten fluidischen Zustand eines Fluidwegs (3, 4) durch das Fluidgehäuse (5) festlegt, der sich von dem ersten fluidischen Zustand unterscheidet; und
zumindest einer Feder (2) zum Halten des Schaltelements (6) innerhalb des Fluidgehäuses (5), wobei die zumindest eine Feder (2) ausgebildet ist, um das Schaltelement (6) in der ersten Stellung (91) oder in der zweiten Stellung (92) stabil zu positionieren, und wobei die Feder (2) ausgebildet ist, um für einen Wechsel des Schaltelements (6) von einer der zwei Stellungen (91, 92) in die andere der zwei Stellungen (91, 92) einen Zufluss an kinetischer Energie durch das Schaltelement (6) aufzunehmen, **dadurch gekennzeichnet, daß** das Schaltelement einen kugelförmigen Gegenstand aufweist.

2. Schaltventil (100) gemäß Anspruch 1, wobei das Schaltelement (6) ausgelegt ist, um sich unter Einnahme eines Minimums der potentiellen Energie in jeder der zwei Stellungen (91, 92) ohne weiteren Energieverbrauch stabil zu positionieren und wobei das Schaltelement (6) ausgebildet ist, um sich unter Zufuhr einer Losbrechenergie durch die Betätigungseinrichtung (70) von einer der zwei Stellungen (91, 92) in die andere der zwei Stellungen (91, 92) zu bewegen,
wobei die Betätigungseinrichtung (70) ausgebildet ist, um mittels der stoßartigen Krafteinwirkung auf das Fluidgehäuse (5) einen Potentialwall an potentieller Energie, der das Schaltelement (6) in einer der zwei Stellungen (91, 92) beharren lässt, sowie weitere Kräfte, die das Schaltelement (6) am Verlassen der jeweiligen Stellung (91, 92) hindern, zu überwinden, um dem Schaltelement (6) die Losbrechenergie zuzuführen.

3. Schaltventil (100) gemäß einem der Ansprüche 1 oder 2, wobei das Fluidgehäuse (5) im Bereich der stoßartigen Krafteinwirkung als eine flexible Membran (108) oder als eine starre Wand (109) ausgebildet ist.

4. Schaltventil (100) gemäß einem der vorhergehenden Ansprüche, wobei die Betätigungseinrichtung (70) folgende Merkmale aufweist:
ein Wandlerelement (12); und
ein Kontaktelement (7),
wobei das Wandlerelement (12) ausgelegt ist, um eine Energie aus einer bereitgestellten Energiequelle in eine Bewegungsenergie umzuwandeln, um das Kontaktelement (7) zum Bewirken der stoßartigen Krafteinwirkung anzutreiben.

5. Schaltventil (100) gemäß Anspruch 4, wobei die Betätigungseinrichtung (70) ferner ein Mitnehmerelement (8) zur Übertragung der von dem Wandlerelement (12) gewandelten Bewegungsenergie auf das Kontaktelement (7) aufweist.

6. Schaltventil (100) gemäß Anspruch 5, wobei das Mitnehmerelement (8) an einem ersten Ende eingespannt ist und an einem zweiten Ende, in dessen Bereich das Kontaktelement (7) angebracht ist, beweglich ist.

7. Schaltventil (100) gemäß Anspruch 5, wobei das Mitnehmerelement (8) ein Gelenk (15) oder ein Lager (24) aufweist, und
wobei die Bewegungsenergie des Wandlerelements (12) von einem ersten Hebelarm (301), der durch einen Krafteinwirkpunkt des Wandlerelements (12) auf das Mitnehmerelement (8) und die Achse (300) des Lagers (24) oder des Gelenks (15) gebildet wird, auf einen zweiten Hebelarm (302), der durch einen Krafteinwirkpunkt des Kontaktelements (7) auf das Fluidgehäuse (5) und die Achse (300) des Lagers (24) oder des Gelenks (15) gebildet wird, übertragen wird.

8. Schaltventil (100) gemäß einem der Ansprüche 4 bis 7, wobei das Wandlerelement (12) als ein piezoelektrischer Biegewandler, als ein piezoelektrischer Stack, als ein elektromagnetischer Antrieb, als ein elektrostatischer Antrieb, als ein pneumatischer Antrieb, als ein hydraulischer Antrieb oder als ein manueller Antrieb mit mechanischer Übersetzung ausgebildet ist.

9. Schaltventil (100) gemäß einem der Ansprüche 7 oder 8, wobei die Betätigungseinrichtung (70) einen Energiespeicher (1) aufweist, der durch das Wandlerelement (12) mit der Losbrechenergie aufgeladen wird, und die Losbrechenergie an das Kontaktelement (7) abgibt.

10. Schaltventil (100) gemäß einem der vorhergehenden Ansprüche, wobei das Fluidgehäuse (5) ein Dichtelement (13) aufweist, das ausgebildet ist, um zusammen mit dem sich in der zweiten Stellung (92) befindlichen Schaltelement (6) den Durchgang des Fluids durch das Fluidgehäuse (5) abzudichten, um das Schaltventil (100) zu schließen.

11. Schaltventil (100) gemäß einem der vorhergehenden Ansprüche, wobei das Fluidgehäuse (5) ausgebildet ist, um bei einem Schaltelement (6) in der ersten Stellung (91) einen ersten Fluidweg (31, 4) durch das Fluidgehäuse (5) freizugeben, und einen zweiten Fluidweg (32, 4) durch das Fluidgehäuse (5) zu sperren, der sich von dem ersten Fluidweg (31, 4) unterscheidet, und wobei das Fluidgehäuse (5) ausgebildet ist, um bei einem Schaltelement (6) in der zweiten Stellung (92) den zweiten Fluidweg (32, 4) durch das Fluidgehäuse (5) freizugeben, und den ersten Fluidweg (31, 4) durch das Fluidgehäuse (5) zu sperren.

12. Schaltventil (100) gemäß einem der vorhergehenden Ansprüche, wobei das Schaltelement (6) ausgebildet ist, um bei einem Ausfall der Energieversorgung die zweite Stellung (92) einzunehmen, um einen möglichst großen fluidischen Widerstand aufzuweisen.

13. Schaltventil (100) gemäß einem der vorhergehenden Ansprüche, wobei die Betätigungseinrichtung (70) ausgebildet ist, um die stoßartige Krafteinwirkung auf das Fluidgehäuse (5) an einer Mehrzahl von Gehäuseaußenpunkten (101) zu bewirken, um das Schaltelement von der ersten (91) oder zweiten (92) Stellung in eine weitere Stellung (91a,b,c) zu bewegen, deren Position sich aus einer Überlagerung der an der Mehrzahl von Gehäuseaußenpunkten (101) auf das Schaltelement (6) einwirkenden Kräfte bestimmt
wobei das Schaltventil eine Mehrzahl von Schaltzuständen aufweist, die durch die Stellungen (91, 92, 91a,b,c) bestimmt sind, die das mindestens eine Schaltelement (6) einnimmt, und wobei jedem der Schaltzustände mindestens ein Fluidweg (3,4) durch das Fluidgehäuse (5) zugeordnet ist.

14. Schaltventil (100) gemäß Anspruch 13, wobei die Betätigungseinrichtung (70) ferner eine programmierbare Steuerung aufweist, um abhängig von einem Steuersignal die Krafteinwirkung auf das Fluidgehäuse (5) an Gehäuseaußenpunkten (101) aus der Mehrzahl von Gehäuseaußenpunkten (101) zu bewirken, so dass das mindestens eine Schaltelement (6) die von der Steuerung vorgegebene Position einnimmt.

15. Verfahren (200) zum Schalten eines Schaltventils (100) mit.
einem Fluidgehäuse (5);
mindestens einem Schaltelement (6) innerhalb des Fluidgehäuses (5), wobei das Schaltelement einen kugelförmigen Gegenstand aufweist;
einer Betätigungseinrichtung (70) außerhalb des Fluidgehäuses (5); und
zumindest einer Feder (2) zum Halten des Schaltelements (6) innerhalb des Fluidgehäuses (5), wobei die zumindest eine Feder (2) ausgebildet ist, um das Schaltelement (6) in der ersten Stellung (91) oder in der zweiten Stellung (92) stabil zu positionieren, und wobei die Feder (2) ausgebildet ist, um für einen Wechsel des Schaltelements (6) von einer der zwei Stellungen (91, 92) in die andere der zwei Stellungen (91, 92) einen Zufluss an kinetischer Energie durch das Schaltelement (6) aufzunehmen,
wobei das Verfahren (200) folgenden Schritt (201) aufweist:
Aufbringen einer stoßartigen Krafteinwirkung auf das Fluidgehäuse (5) mit der Betätigungseinrichtung (70), um eine impulsartige Kraftübertragung auf das Schaltelement (6) zu bewirken, um das Schaltelement (6) von einer ersten Stellung (91) in eine zweite Stellung (92) zu bewegen; wobei das Schaltelement (6) in der ersten Stellung (91) einen ersten fluidischen Zustand eines Fluidwegs (3, 4) durch das Fluidgehäuse (5) festlegt und wobei das Schaltelement (6) in der zweiten Stellung (92) einen zweiten fluidischen Zustand eines Fluidwegs (3, 4) durch das Fluidgehäuse (5) festlegt, der sich von dem ersten fluidischen Zustand unterscheidet.

## Claims

1. A switching valve (100) comprising
a fluid housing (5);
at least one switching element (6) within the fluid housing (5);
an actuation means (70) outside the fluid housing (5),
wherein the actuation means (70) is configured to cause a pulse-like transmission of force on the switching element (6) by means of an impact-like force effect on the fluid housing (5), so as to move the switching element (6) from a first position (91) to a second position (92), the switching element (6) in the first position (91) defining a first fluidic state of a fluid path (3, 4) through the fluid housing (5), and the switching element (6) in the second position (92) defining a second fluidic state of a fluid path (3, 4) through the fluid housing (5), which second fluidic state differs from the first fluidic state; and
at least one spring (2) for holding the switching element (6) inside the fluid housing (5), the at least one spring (2) being configured to stably position the switching element (6) in the first position (91) or in the second position (92), and the spring (2) being configured to receive an inflow of kinetic energy through the switching element (6) for a change of the switching element (6) from one of the two positions (91, 92) to the other of the two positions (91, 92),
**characterized in that** the switching element comprises a spherical object.

2. The switching valve (100) as claimed in claim 1, wherein the switching element (6) is configured to stably position itself, while receiving a minimum of the potential energy, in each of the two positions (91, 92) without any further energy consumption, and wherein the switching element (6) is configured to move, while having a breakaway energy supplied to it by the actuation means (70), from one of the two positions (91, 92) to the other of the two positions (91, 92),
wherein the actuation means (70) is configured to overcome, by means of the impact-like force effect on the fluid housing (5), a potential barrier of potential energy which causes the switching element (6) to remain in one of the two positions (91, 92), as well as further forces preventing the switching element (6) from leaving the respective position (91, 92), so as to supply the breakaway energy to the switching element (6).

3. The switching valve (100) as claimed in any of claims 1 or 2, wherein the fluid housing (5) is configured, in the area of the impact-like force effect, as a flexible membrane (108) or as a rigid wall (109).

4. The switching valve (100) as claimed in any of the previous claims, wherein the actuation means (70) comprises:
a converter element (12); and
a contact element (7),
the converter element (12) being configured to convert energy from an energy source provided to kinetic energy so as to drive the contact element (7) to cause the impact-like force effect.

5. The switching valve (100) as claimed in claim 4, wherein the actuation means (70) further comprises a pusher element (8) for transmitting the kinetic energy, converted by the converter element (12), to the contact element (7).

6. The switching valve (100) as claimed in claim 5, wherein the pusher element (8) is clamped at a first end, and is movable at a second end, in the area of which the contact element (7) is mounted.

7. The switching valve (100) as claimed in claim 5, wherein the pusher element (8) comprises a hinge (15) or a bearing (24), and
wherein the kinetic energy of the converter element (12) is transmitted from a first lever arm (301), which is formed by a point of a force effect of the converter element (12) on the pusher element (8) and the axis (300) of the bearing (24) or of the hinge (15), to a second lever arm (302), which is formed by a point of a force effect of the contact element (7) on the fluid housing (5) and the axis (300) of the bearing (24) or of the hinge (15).

8. The switching valve (100) as claimed in any of claims 4 to 7, wherein the converter element (12) is configured as a piezoelectric bending converter, as a piezoelectric stack, as an electromagnetic drive, as an electrostatic drive, as a pneumatic drive, as a hydraulic drive, or as a manual drive with mechanical transmission.

9. The switching valve (100) as claimed in claim 7 or 8, wherein the actuation means (70) comprises an energy store (1) which is charged with the breakaway energy by the converter element (12), and gives off the breakaway energy to the contact element (7).

10. The switching valve (100) as claimed in any of the previous claims, wherein the fluid housing (5) comprises a sealing element (13) configured to seal off the passage of the fluid through the fluid housing (5) together with the switching element (6) located in the second position (92), so as to close the switching valve (100).

11. The switching valve (100) as claimed in any of the previous claims, wherein the fluid housing (5) is configured to unblock, with a switching element (6) in the first position (91), a first fluid path (31, 4) through the fluid housing (5), and to block a second fluid path (32, 4) through the fluid housing (5), which second fluid path differs from the first fluid path (31, 4), and wherein the fluid housing (5) is configured to unblock, with a switching element (6) in the second position (92), the second fluid path (32, 4) through the fluid housing (5) and to block the first fluid path (31, 4) through the fluid housing (5).

12. The switching valve (100) as claimed in any of the previous claims, wherein the switching element (6) is configured to adopt the second position (92) upon a failure in the energy supply, so as to comprise as large a fluidic resistance as possible.

13. The switching valve (100) as claimed in any of the previous claims, wherein the actuation means (70) is configured to cause the impact-like force effect on the fluid housing (5) at a plurality of external housing points (101) so as to move the switching element from the first (91) or second (92) position to a further position (91a,b,c), the location of which is determined from a superposition of the forces acting upon the switching element (6) at the plurality of external housing points (101),
wherein the switching valve comprises a plurality of switching states determined by the positions (91, 92, 91a,b,c) adopted by the at least one switching element (6), and wherein each of the switching states comprises at least one fluid path (3, 4) through the fluid housing (5) associated with it.

14. The switching valve (100) as claimed in claim 13, wherein the actuation means (70) further comprises a programmable control so as to cause, in dependence on a control signal, the force effect on the fluid housing (5) at external housing points (101) among the plurality of external housing points (101), so that the at least one switching element (6) adopts the position predefined by the control.

15. A method (200) for switching a switching valve (100), comprising
a fluid housing (5);
at least one switching element (6) within the fluid housing (5), the switching element comprising a spherical object;
an actuation means (70) outside the fluid housing (5); and
at least one spring (2) for holding the switching element (6) inside the fluid housing (5), the at least one spring (2) being configured to stably position the switching element (6) in the first position (91) or in the second position (92), and the spring (2) being configured to receive an inflow of kinetic energy through the switching element (6) for a change of the switching element (6) from one of the two positions (91,92) to the other of the two positions (91, 92),
the method (200) comprising the following step (201):
applying an impact-like force effect on the fluid housing (5) with the actuation means (70) so as to cause pulse-like force transmission to the switching element (6) so as to move the switching element (6) from a first position (91) to a second position (92), the switching element (6) in the first position (91) defining a first fluidic state of a fluid path (3, 4) through the fluid housing (5), and the switching element (6) in the second position (92) defining a second fluidic state of a fluid path (3, 4) through the fluid housing (5), which second fluidic state differs from the first fluidic state.

## Revendications

1. Soupape de commande (100), avec
un boîtier à fluide (5);
au moins un élément de commutation (6) dans le boîtier à fluide (5),
un moyen d'actionnement (70) à l'extérieur du boîtier à fluide (5),
le moyen d'actionnement (70) étant réalisé pour provoquer, au moyen d'une action de force de type coup sur le boîtier à fluide (5), une transmission de force par impulsion sur l'élément de commutation (6), pour déplacer l'élément de commutation (6) d'une première position (91) en une deuxième position (92), l'élément de commutation (6) fixant, dans la première position, un premier état fluidique d'un trajet de fluide (3, 4) dans le boîtier à fluide (5) et l'élément de commutation (6) fixant, dans la deuxième position (92), un deuxième état fluidique d'un trajet de fluide (3, 4) dans le boîtier à fluide (5) qui est différent du premier état de fluide; et
au moins un ressort (2) pour maintenir l'élément de commutation (6) à l'intérieur du boîtier à fluide (5), l'au moins un ressort (2) étant réalisé pour positionner l'élément de commutation (6) de manière stable dans la première position (91) ou dans la deuxième position (92), et le ressort (2) étant réalisé pour recevoir, pour un changement de l'élément de commutation (6) de l'une des deux positions (91, 92) à l'autre des deux positions (91, 92), une amenée d'énergie cinétique par l'élément de commutation (6),
**caractérisé par** la fait que l'élément de commutation présente un objet sphérique.

2. Soupape de commande (100) selon la revendication 1, dans laquelle l'élément de commutation (6) est conçu pour se positionner de manière stable dans chacune des deux positions (91, 92), tout en absorbant un minimum d'énergie potentielle, sans autre consommation d'énergie, et dans laquelle l'élément de commutation (6) est réalisé pour se déplacer, en cas d'alimentation d'une d'énergie de dégagement par le moyen d'actionnement (70), de l'une des deux positions (91, 92) à l'autre des deux positions (91, 92),
dans laquelle le moyen d'actionnement (70) est réalisé pour vaincre, au moyen de l'action de force de type coup sur le boîtier à fluide (5), une barrière de potentiel d'énergie potentielle qui permet que l'élément de commutation (6) reste dans l'une des deux positions (91, 92), ainsi que d'autres forces qui empêchent que l'élément de commutation (6) n'abandonne la position respective (91, 92), pour amener l'énergie de dégagement à l'élément de commutation (6).

3. Soupape de commande (100) selon l'une des revendications 1 ou 2, dans laquelle le boîtier à fluide (5) est réalisé, au niveau de l'action de force de type coup, sous forme de membrane flexible (108) ou sous forme de paroi rigide (109).

4. Soupape de commande (100) selon l'une des revendications précédentes, dans laquelle le moyen d'actionnement (70) présente les caractéristiques suivantes:
un élément convertisseur (12); et
un élément de contact (7),
dans laquelle l'élément convertisseur (12) est réalisé pour convertir une énergie d'une source d'énergie mise à disposition en une énergie cinétique, pour actionner l'élément de contact (7) pour provoquer l'action de force de type coup.

5. Soupape de commande (100) selon la revendication 4, dans laquelle le moyen d'actionnement (70) présente par ailleurs un élément d'entraînement (8) pour transmettre l'énergie cinétique convertie par l'élément convertisseur (12) à l'élément de contact (7).

6. Soupape de commande (100) selon la revendication 5, dans laquelle l'élément d'entraînement (8) est serré à une première extrémité et est mobile à une deuxième extrémité à l'endroit de laquelle est placé l'élément de contact (7).

7. Soupape de commande (100) selon la revendication 5, dans laquelle l'élément d'entraînement (8) présente une articulation (15) ou un palier (24), et
dans laquelle l'énergie cinétique de l'élément convertisseur (12) est transmise d'un premier bras de levier (301), qui est formé par un point d'action de force de l'élément convertisseur (12) sur l'élément d'entraînement (8) et sur l'axe (300) du palier (24) ou de l'articulation (15), à un deuxième bras de levier (302), qui est formé par un point d'action de force de l'élément de contact (7) sur le boîtier à fluide (5) et sur l'axe (300) du palier (24) ou de l'articulation (15).

8. Soupape de commande (100) selon l'une des revendications 4 à 7, dans laquelle l'élément convertisseur (12) est réalisé sous forme de convertisseur de fléchissement piézoélectrique, d'empilement piézoélectrique, d'entrainement électromagnétique, d'entrainement électrostatique, d'entrainement pneumatique, d'entrainement hydraulique ou d'entrainement manuel à multiplicateur mécanique.

9. Soupape de commande (100) selon l'une des revendications 7 ou 8, dans laquelle le moyen d'actionnement (70) présente un accumulateur d'énergie (1) qui est chargé par l'élément convertisseur (12) de l'énergie de dégagement et qui fournit l'énergie de dégagement à l'élément de contact (7).

10. Soupape de commande (100) selon l'une des revendications précédentes, dans laquelle le boîtier à fluide (5) présente un élément d'étanchéité (13) qui est formé pour rendre étanche, ensemble avec l'élément de commutation (6) se trouvant dans la deuxième position (92), le passage du fluide dans le boîtier à fluide (5), pour fermer la soupape de commande (100).

11. Soupape de commande (100) selon l'une des revendications précédentes, dans laquelle le boîtier à fluide (5) est réalisé pour libérer, à un élément de commutation (6) dans la première position (91), un premier trajet de fluide (31, 4) dans le boîtier à fluide (5) et pour bloquer un deuxième trajet de fluide (32, 4) dans le boîtier à fluide (5), qui est différent du premier trajet de fluide (31, 4), et dans laquelle le boîtier à fluide (5) est réalisé pour libérer, à un élément de commutation (6) dans la deuxième position (92), le deuxième trajet de fluide (32, 4) dans le boîtier de fluide (5), et pour bloquer le premier trajet de fluide (31, 4) dans le boîtier à fluide (5).

12. Soupape de commande (100) selon l'une des revendications précédentes, dans laquelle l'élément de commutation (6) est réalisé pour adopter, en cas de panne d'alimentation d'énergie, la deuxième position (92), pour présenter une résistance fluidique aussi grande que possible.

13. Soupape de commande (100) selon l'une des revendications précédentes, dans laquelle le moyen d'actionnement (70) est réalisé pour provoquer l'action de force de type coup sur le boîtier à fluide (5) en une pluralité de points extérieurs du boîtier (101), pour déplacer l'élément de commutation de la première (91) ou de la deuxième (92) position en une autre position (91a, b, c) dont la position est déterminée à partir d'une superposition des forces agissant à la pluralité de points extérieurs du boîtier (101) sur l'élément de commutation (6),
dans laquelle la soupape de commande présente une pluralité d'états de commutation qui sont déterminés par les positions (91, 92, 91a, b, c) qu'adopte l'au moins un élément de commutation (6), et dans laquelle est associé à chacun des états de commutation au moins un trajet de fluide (3,4) dans le boîtier à fluide (5).

14. Soupape de commande (100) selon la revendication 13, dans laquelle le moyen d'actionnement (70) présente par ailleurs une commande programmable pour provoquer, en fonction d'un signal de commande, l'action de force de type coup sur le boîtier à fluide (5) en des points extérieurs du boîtier (101) parmi la pluralité de points extérieurs du boîtier (101), de sorte que l'au moins un élément de commutation (6) adopte la position prédéterminée par la commande.

15. Procédé (200) pour commuter une soupape de commande (100), avec
un boîtier à fluide (5);
au moins un élément de commutation (6) à l'intérieur du boîtier à fluide (5), l'élément de commutation présentant un objet sphérique;
un moyen d'actionnement (70) à l'extérieur du boîtier à fluide (5); et
au moins un ressort (2) pour maintenir l'élément de commutation (6) à l'intérieur du boîtier à fluide (5), l'au moins un ressort (2) étant réalisé pour positionner l'élément de commande (6) de manière stable dans la première position (91) ou dans la deuxième position (92), et le ressort (2) étant réalisé pour recevoir, pour un changement de l'élément de commutation (6) de l'une des deux positions (91, 92) à l'autre des deux positions (91, 92), une amenée d'énergie cinétique par l'élément de commutation (6),
dans lequel le procédé (200) présente l'étape suivante (201):
appliquer une action de force de type coup sur le boîtier à fluide (5) par le moyen d'actionnement (70), pour provoquer une transmission de force de type coup sur l'élément de commutation (6), pour déplacer l'élément de commutation (6) d'une première position (91) en une deuxième position (92), l'élément de commutation (6) fixant, dans la première position (91), un premier état fluidique d'un trajet de fluide (3, 4) dans le boîtier à fluide (5) et l'élément de commutation (6) fixant, dans la deuxième position (92), un deuxième état fluidique d'un trajet de fluide (3, 4) dans le boîtier à fluide (5) qui est différent du premier état fluidique.
